# EUROPEAN PATENT APPLICATION

(11) **EP 4 622 361 A1**
(43) Date of publication of application: **24.09.2025**
(21) Application number: 23910081.1
(22) Date of filing: 12.12.2023
(51) Int. Cl.: H04W 56/00, G06K 7/00

(54) **COMMUNICATION METHOD AND COMMUNICATION APPARATUS**

(30) Priority: 27.12.2022 CN 202211686188
(71) Applicant: Huawei Technologies Co., Ltd., Shenzhen, Guangdong 518129 (CN)
(72) Inventor: LU, Zhenwei, Shenzhen, Guangdong 518129 (CN); LI, Shuai, Shenzhen, Guangdong 518129 (CN); LI, Chenwan, Shenzhen, Guangdong 518129 (CN); WU, Yiling, Shenzhen, Guangdong 518129 (CN)
(74) Representative: Gill Jennings & Every LLP
(86) International application number: PCT/CN2023/138055
(87) International publication number: WO 2024/140151

(57) **Abstract**

This application provides a communication method and a communication apparatus. The communication method includes: A first network device sends a first downlink signal at first time. The first time is also time at which a second network device sends a second downlink signal, the first downlink signal includes first information, the second downlink signal includes second information, and a length of the first information is the same as a length of the second information. A first terminal device receives the first downlink signal, and sends a first uplink signal to the first network device at second time based on the first downlink signal. Correspondingly, the first network device receives the first uplink signal at the second time. The second time is also time at which the second network device receives a second uplink signal from a second terminal device, the first uplink signal includes third information, the second uplink signal includes fourth information, and a length of the third information is the same as a length of the fourth information. The communication method provided in this application can improve a coverage capability, and help improve communication efficiency.

## Description

This application claims priority to Chinese Patent Application No. 202211686188.0, filed with the China National Intellectual Property Administration on December 27, 2022 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

Currently, power supply of internet of things terminals has become a hot topic in research of an internet of things. Internet of things terminals that do not rely on battery power supply are an important evolution trend of a next-generation internet of things and an enabling feature for further expanding market space of the internet of things. Currently, a passive internet of things system includes a reader (reader) and a tag communicating with each other through a wireless channel.

In a scenario of the communication between the reader and the tag, there are typically a plurality of readers, and the plurality of readers may perform inventory on the tag in a specific area. Currently, the plurality of readers may send a downlink carrier signal in turn. For example, in the plurality of readers, one reader sends a downlink carrier signal, and the remaining readers jointly receive an uplink communication signal at the same time. This implementation results in a small inventory capacity at a time.

### SUMMARY

This application provides a communication method and a communication apparatus, to improve an inventory capacity when a tag communicates with a reader.

According to a first aspect, a communication method is provided. The method includes: A first network device sends a first downlink signal at first time, where the first time is also time at which a second network device sends a second downlink signal, the first downlink signal includes first information, the second downlink signal includes second information, and a length of the first information is the same as a length of the second information. The first network device receives a first uplink signal from a first terminal device at second time, where the second time is also time at which the second network device receives a second uplink signal from a second terminal device, the first uplink signal includes third information, the second uplink signal includes fourth information, and a length of the third information is the same as a length of the fourth information.

In a passive internet of things scenario, the first network device may be a reader. In various communication systems, the first network device may be a core network device or an access network device (for example, a base station).

The first time is also the time at which the second network device sends the second downlink signal. In other words, the first time is also time at which the second terminal device receives the second downlink signal from the second network device. At the first time, the first network device sends the first downlink signal, and the second network device sends the second downlink signal. In other words, at a same time point or in a same time period, all different network devices are sending downlink signals. In other words, downlink communication behaviors of the different network devices are consistent or synchronous. It may be understood that, in this application, an example in which the first network device and the second network device synchronously send downlink signals is used for description. A quantity of synchronous network devices is not limited in this application.

The second time is also time at which the second terminal device sends the second uplink signal to the second network device. In other words, the second time is also the time at which the second network device receives the second uplink signal from the second terminal device. At the second time, the first terminal device sends the first uplink signal to the first network device, and the second terminal device sends the second uplink signal to the second network device. In other words, all different terminal devices are sending uplink signals at a same time point or in a same time period. In other words, uplink communication behaviors of the different terminal devices are consistent or synchronous. It may be understood that, in this application, an example in which the first terminal device and the second terminal device synchronously send uplink signals is used for description. A quantity of synchronous terminal devices is not limited in this application.

The first downlink signal includes the first information, the second downlink signal includes the second information, and the length of the first information is the same as the length of the second information. In other words, lengths of downlink signals sent by different network devices are the same. This helps cause duration of sending the signals by the different network devices to be the same, and shorten waiting duration of the different network devices.

The first information and the second information may be information of a same type, or may be information of different types. This is not limited in this application.

The first uplink signal includes the third information, the second uplink signal includes the fourth information, and the length of the third information is the same as the length of the fourth information. In other words, lengths of uplink signals sent by different terminal devices are the same. This helps cause duration of sending the signals by the different terminal devices to be the same, and shorten waiting duration of the different terminal devices.

The third information and the fourth information may be information of a same type, or may be information of different types. This is not limited in this application.

According to the communication method provided in this application, the first network device and the second network device send downlink communication signals at the same time, and receive uplink communication signals at the same time, and uplink communication behaviors and downlink communication behaviors are synchronous, so that a coverage capability can be improved, and communication efficiency can be improved. In addition, lengths of information included in uplink communication and downlink communication of the first network device and the second network device are the same. This helps shorten waiting duration of different network devices and avoid a waste of time resources. If this is applied to an inventory scenario, an inventory capacity can be increased.

With reference to the first aspect, in some implementations of the first aspect, if the first uplink signal is an uplink data signal, the first downlink signal includes a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted.

The first uplink signal is the uplink data signal, in other words, the first terminal device sends data to the first network device by using the first uplink signal. For example, the first uplink signal may be an EPC. The first uplink signal is the uplink data signal. If failing to receive the first uplink signal, the first network device may indicate the first terminal device to retransmit the first uplink signal.

The first downlink signal includes the maximum quantity of transmissions or the maximum quantity of retransmissions. In other words, the first network device indicates, by using the first downlink signal, a quantity of times that the first terminal device transmits the first uplink signal, and the first terminal device may select, based on the indicated quantity of transmissions, whether the first uplink signal needs to be retransmitted. The maximum quantity of transmissions may be an integer greater than or equal to 1, and the maximum quantity of retransmissions may be an integer greater than or equal to 0. If the maximum quantity of transmissions is 1 or the maximum quantity of retransmissions is 0, the first terminal device transmits the first uplink signal only once.

If failing to receive the first uplink signal, the first network device sends feedback information to the first terminal device, to indicate the first terminal device to retransmit the first uplink signal. The first terminal device may determine, based on the feedback information, whether a quantity of transmissions of the first uplink signal reaches the maximum quantity of transmissions, or whether a quantity of retransmissions of the first uplink signal reaches the maximum quantity of retransmissions. If the maximum quantity of transmissions or the maximum quantity of retransmissions is not reached, the first terminal device may send the first uplink signal to the first network device based on the feedback information sent by the first network device. If the maximum quantity of transmissions or the maximum quantity of retransmissions is reached, the first terminal device does not send the first uplink signal to the first network device based on the feedback information sent by the first network device. In other words, the first terminal device does not retransmit the first uplink signal.

According to the communication method provided in this application, a downlink signal indicates a maximum quantity of transmissions or a maximum quantity of retransmissions, to limit a quantity of retransmissions of the first uplink signal. This implements adjustment of a retransmission time location, eliminates a phenomenon of slot unalignment between different devices caused by retransmission, and reduces the waste of time resources. In addition, the downlink signal indicates that no additional signaling needs to be added. This helps reduce signaling overheads.

With reference to the first aspect, in some implementations of the first aspect, the method further includes: If the first uplink signal is an uplink data signal, and the first network device fails to receive the first uplink signal, the first network device sends first feedback information, where the first feedback information indicates that receiving of the first uplink signal is incorrect, and indicates not to retransmit the first uplink signal.

The first network device may control, by using the first feedback information, the first terminal device not to perform retransmission, to limit a quantity of transmissions of the first uplink signal. The first network device may control, by using the first feedback information, the first terminal device to transmit the first uplink signal once. Specifically, if the first network device fails to receive the first uplink signal, the first network device may send the first feedback information to the first terminal device, to indicate that receiving of the first uplink signal is incorrect, and indicate not to retransmit the first uplink signal. After receiving the first feedback information, the first terminal device does not retransmit the first uplink signal. In this case, the first terminal device transmits the first uplink signal only once, and the first network device fails to receive the first uplink signal.

The first network device may control, by using the first feedback information, the first terminal device to transmit the first uplink signal twice. Specifically, if the first network device fails to receive the first uplink signal, the first network device may send the feedback information to the first terminal device to indicate that receiving of the first uplink signal is incorrect, and indicate to retransmit the first uplink signal. After receiving the feedback information, the first terminal device may send the first uplink signal to the first network device. If the first network device still fails to receive the first uplink signal, the first network device may send the first feedback information to indicate that receiving of the first uplink signal is incorrect, and indicate not to retransmit the first uplink signal. After receiving the first feedback information, the first terminal device does not retransmit the first uplink signal. In this case, the first terminal device transmits the first uplink signal twice, and the first network device fails to receive the first uplink signal. This is similar for other times, and details are not listed one by one herein.

According to the communication method provided in this application, the first feedback information indicates not to perform retransmission, to limit a quantity of retransmissions of the first uplink signal. This implements adjustment of a retransmission time location, eliminates a phenomenon of slot unalignment between different devices caused by retransmission, and reduces the waste of time resources. In addition, a terminal device may not retransmit the first uplink signal based on the first feedback information indicating not to perform retransmission, and does not need to determine whether retransmission is needed, to save a computing capability of the terminal.

With reference to the first aspect, in some implementations of the first aspect, the method further includes: If the first uplink signal is an uplink data signal, and the first network device fails to receive the first uplink signal, the first network device sends second feedback information, where the second feedback information indicates that receiving of the first uplink signal is correct.

The first network device may control, by using the second feedback information, the first terminal device not to perform retransmission, to limit a quantity of transmissions of the first uplink signal. When receiving the second feedback information, the first terminal device may consider that the first uplink signal does not need to be transmitted, and does not perform retransmission.

The first network device may control, by using the second feedback information, the first terminal device to transmit the first uplink signal once. Specifically, if the first network device fails to receive the first uplink signal, the first network device may send the second feedback information to the first terminal device, to indicate that receiving of the first uplink signal is correct. After receiving the second feedback information, the first terminal device does not retransmit the first uplink signal. In this case, the first terminal device transmits the first uplink signal only once, and the first network device fails to receive the first uplink signal.

The first network device may control, by using the second feedback information, the first terminal device to transmit the first uplink signal twice. Specifically, if the first network device fails to receive the first uplink signal, the first network device may send the feedback information to the first terminal device to indicate that receiving of the first uplink signal is incorrect, and indicate to retransmit the first uplink signal. After receiving the feedback information, the first terminal device may send the first uplink signal to the first network device. If the first network device still fails to receive the first uplink signal, the first network device may send the second feedback information to indicate that receiving of the first uplink signal is correct. After receiving the second feedback information, the first terminal device does not retransmit the first uplink signal. In this case, the first terminal device transmits the first uplink signal twice, and the first network device fails to receive the first uplink signal. This is similar for other times, and details are not listed one by one herein.

According to the communication method provided in this application, the second feedback information indicates that receiving is correct, to limit a quantity of retransmissions of the first uplink signal. This implements adjustment of a retransmission time location, eliminates a phenomenon of slot unalignment between different devices caused by retransmission, and reduces the waste of time resources.

With reference to the first aspect, in some implementations of the first aspect, after the first network device sends the second feedback information, the method further includes: The first network device sends second indication information, where the second indication information indicates the first terminal device to re-upload the first uplink signal.

After receiving the second feedback information, the first terminal device modifies a flag bit, and does not participate in a subsequent inventory procedure. However, the first uplink signal fails to be received. To ensure that the first network device successfully receives the first uplink signal, the first network device may send the second indication information. After receiving the second indication information, the first terminal device may send the first uplink signal to the first network device, so that the first network device successfully receives the first uplink signal. The second indication information may be sent in a time period in which retransmission is allowed or in a round in which retransmission is allowed.

According to the communication method provided in this application, when the first network device fails to receive the first uplink signal but has sent the second feedback information, the first network device may indicate, by using the second indication information, a terminal device to retransmit the first uplink signal. This helps ensure that the first network device successfully receives the first uplink signal and completes data transmission.

With reference to the first aspect, in some implementations of the first aspect, the first time and the second time are time in a first round of data transmission; and if the first round of data transmission meets a first preset condition, the first uplink signal is transmitted once in the first round of data transmission; or if the first round of data transmission does not meet the first preset condition, the first uplink signal is transmitted at least twice in the first round of data transmission.

The first round of data transmission indicates one complete data transmission procedure, and the first round of data transmission represents only one round of data transmission, and does not represent a sequence. The first time and the second time are time in the first round of data transmission. It may indicate that sending of the first downlink signal and receiving of the first uplink signal are in a same data transmission procedure. If this round of data transmission meets the first preset condition, the first network device may control the first uplink signal to be transmitted once in this round of data transmission. If this round of data transmission does not meet the first preset condition, the first network device may control the first uplink signal to be transmitted at least twice in this round of data transmission. If this round of data transmission does not meet the first preset condition, a specific quantity of transmissions of the first uplink signal may be a preset value greater than or equal to 2, or may be a value until the first network device successfully receives the first uplink signal. This is not limited in this application.

According to the communication method provided in this application, when the first preset condition is met, the first uplink signal may be transmitted only once in one complete data transmission procedure. This helps implement the adjustment of the retransmission time location, eliminate the phenomenon of slot unalignment between different devices caused by retransmission, and reduce the waste of time resources. When the first preset condition is not met, the first uplink signal may be transmitted at least twice in one complete data transmission procedure. This helps the first network device quickly obtain data.

With reference to the first aspect, in some implementations of the first aspect, the first preset condition includes one round of data transmission in n rounds of data transmission, where n is an integer greater than or equal to 1.

In this application, it may be preset that the first uplink signal is transmitted only once in each of the n rounds of data transmission. If the first round of data transmission belongs to any one of the n rounds of data transmission, the first uplink signal is transmitted once in the first round of data transmission. If the first round of data transmission is any round of data transmission other than the n rounds of data transmission, the first uplink signal is transmitted at least twice in the first round of data transmission.

According to the communication method provided in this application, the first uplink signal may be transmitted only once in each of the n rounds of data transmission. In the n rounds of data transmission, this helps implement the adjustment of the retransmission time location, eliminate the phenomenon of slot unalignment between different devices caused by retransmission, and reduce the waste of time resources.

With reference to the first aspect, in some implementations of the first aspect, the first round of data transmission is data transmission after first signaling and before second signaling, the first signaling is query signaling, and the second signaling is select signaling or query signaling.

The first signaling may be considered as a start of one round of data transmission, the second signaling may be considered as an end of one round of data transmission, and communication between the first signaling and the second signaling may be referred to as a round of data transmission. The first signaling may be query signaling, and the second signaling may be select signaling or query signaling.

In the inventory scenario, the first uplink signal may be an EPC. The first terminal device may transmit the EPC only once in each of n rounds of inventory, and transmit the EPC at least twice in each round of inventory other than the n rounds of inventory. In other words, for the EPC, the first terminal device performs only initial transmission in each of the n rounds of inventory, and performs retransmission in each round of inventory other than the n rounds of inventory.

With reference to the first aspect, in some implementations of the first aspect, if the first round of data transmission is an initial round of data transmission in the n rounds of data transmission, the first downlink signal further includes fifth information, and the fifth information indicates that the first round of data transmission is the initial round of data transmission.

If the first round of data transmission is the initial round of data transmission in the n rounds of data transmission, the first network device may perform indication by using the first downlink signal carrying the fifth information, to control a quantity of retransmissions of the first uplink signal in subsequent data transmission.

With reference to the first aspect, in some implementations of the first aspect, the fifth information is select signaling.

The first network device may indicate the initial round of data transmission by using the select signaling. Specifically, the initial round of data transmission includes the select signaling, and another round of data transmission does not include the select signaling. Therefore, the select signaling can be used as a flag of an initial round of inventory.

With reference to the first aspect, in some implementations of the first aspect, the fifth information is a first field in select signaling or query signaling.

The first network device may indicate the initial round of data transmission by using the first field in the select signaling or the query signaling. Specifically, when each round of data transmission includes the select signaling, the first network device may indicate the initial round of data transmission by using the first field in the select signaling. When the select signaling is optional in each round of data transmission, the first network device may indicate the initial round of data transmission by using the first field in the query signaling. The first field may be a special field, for example, an identity (identity, ID) field.

With reference to the first aspect, in some implementations of the first aspect, the fifth information is a first value of a first bit in select signaling or query signaling.

The first network device indicates the initial round of data transmission by using the first value of the first bit in the select signaling or the query signaling. Specifically, when each round of data transmission includes the select signaling, the first network device may indicate the initial round of data transmission by using the first bit in the select signaling. When the select signaling is optional in each round of data transmission, the first network device may indicate the initial round of data transmission by using the first bit in the query signaling. The first value may be "1" or "0".

For example, when the first bit in the query signaling is 1, it may indicate that the first round of data transmission is the initial round of data transmission; or when the first bit in the query signaling is 0, it may indicate that the first round of data transmission is a non-initial round of data transmission.

With reference to the first aspect, in some implementations of the first aspect, the fifth information indicates that a field indicated by the select signaling is different from a field indicated by select signaling in a latest data transmission before the first round of data transmission; or the fifth information indicates that a flag bit indicated by the query signaling is different from a flag bit indicated by query signaling in a latest data transmission before the first round of data transmission.

A first round of data transmission after the first network device changes a terminal device that transmits the first uplink signal may be the initial round of data transmission. Specifically, if the field indicated by the select signaling is different from the field indicated by the select signaling in the latest data transmission before the first round of data transmission, it may be considered that the first network device changes the terminal device that transmits the first uplink signal. In this case, subsequent data transmission starting from a first Query is the initial round of data transmission. Alternatively, if the flag bit indicated by the query signaling is different from the flag bit indicated by the query signaling in the latest data transmission before the first round of data transmission, it may be considered that the first network device changes the terminal device that transmits the first uplink signal. In this case, subsequent data transmission starting from a first Query is the initial round of data transmission.

With reference to the first aspect, in some implementations of the first aspect, if the first round of data transmission does not meet the first preset condition, a first signal is the first uplink signal whose receiving is incorrect, and a second signal is the first uplink signal that is retransmitted, the method includes: The first network device receives, from the first terminal device, the second signal transmitted based on a parameter value that is the same as a parameter value of the first signal.

If failing to receive the first uplink signal, the first network device may send feedback information, where the feedback information indicates that receiving is incorrect and indicates to perform retransmission. After receiving the feedback information, the first terminal device may send the second signal to the first network device based on the parameter value that is the same as the parameter value of the first signal.

According to the communication method provided in this application, no additional indication is needed. The first terminal device directly reuses the parameter value of the first signal, and sends the second signal to the first network device based on the parameter value that is the same as the parameter value of the first signal. This is simple and convenient.

With reference to the first aspect, in some implementations of the first aspect, if the first round of data transmission does not meet the first preset condition, a first signal is the first uplink signal whose receiving is incorrect, and a second signal is the first uplink signal that is retransmitted, the method further includes: The first network device sends first indication information, where the first indication information indicates the first terminal device to transmit the second signal based on a parameter value that is the same as a parameter value of the first signal, or the first indication information indicates the first terminal device to transmit the second signal based on a parameter value that is different from a parameter value of the first signal.

In an example, if the first network device fails to receive the first uplink signal, the first network device may send feedback information, where the feedback information indicates that receiving is incorrect and indicates to perform retransmission; and may further send the first indication information, where the first indication information indicates the first terminal device to transmit the second signal based on the parameter value that is the same as the parameter value of the first signal. After receiving the feedback information and the first indication information, the first terminal device may send the second signal to the first network device based on the parameter value that is the same as the parameter value of the first signal.

In another example, if the first network device fails to receive the first uplink signal, the first network device may send feedback information, where the feedback information indicates that receiving is incorrect and indicates to perform retransmission; and may further send the first indication information, where the first indication information indicates the first terminal device to transmit the second signal based on the parameter value that is different from the parameter value of the first signal. After receiving the feedback information and the first indication information, the first terminal device may send the second signal to the first network device based on the parameter value that is different from the parameter value of the first signal, that is, a new parameter value.

In the two examples, the feedback information and the first indication information may be indicated by using one piece of information. This helps reduce signaling overheads. For example, if the first network device fails to receive the first uplink signal, the first network device may send feedback information, where the feedback information indicates that receiving is incorrect and indicates to perform retransmission, and indicates the first terminal device to transmit the second signal based on the parameter value that is different from the parameter value of the first signal.

According to the communication method provided in this application, in comparison with a manner of directly indicating a parameter value, a manner of indirect indication by using the first indication information occupies a relatively small quantity of bytes.

With reference to the first aspect, in some implementations of the first aspect, if the second signal is transmitted based on a first parameter value, the first indication information further includes the first parameter value, and the first parameter value includes a value of at least one of the following parameters: a transmission rate, a coding scheme, a code rate, a modulation scheme, a modulation order, a quantity of repetitions, a bandwidth, a data type, a data storage area, or a data storage location.

The first parameter value is different from the parameter value of the first signal. The first indication information may further include the first parameter value. In other words, the first network device indicates, by using the first indication information, that a parameter value used for uploading the second signal is different from the parameter value of the first signal, and may further indicate the parameter value used for uploading the second signal.

According to the communication method provided in this application, the first indication information further includes the first parameter value, so that the first terminal device can upload the first signal based on the indicated first parameter value. In comparison with that the first terminal device autonomously determines a parameter value, this helps improve the communication efficiency.

With reference to the first aspect, in some implementations of the first aspect, if the first time and the second time are time in the first round of data transmission, and both the first time and the second time are in first duration in the first round of data transmission, the first uplink signal is transmitted once in the first duration; or if both the first time and the second time are in second duration in the first round of data transmission, the first uplink signal is transmitted at least once in the second duration.

The first terminal device transmits the first uplink signal only once in the first duration. If the first network device fails to receive the first uplink signal, the first terminal device may retransmit the first uplink signal in the second duration. In other words, in the first duration, the first terminal device performs only initial transmission and does not perform retransmission, and in the second duration, the first terminal device then performs retransmission. Therefore, the first duration may also be referred to as an initial transmission time period, and the second duration may be referred to as a retransmission time period.

It should be noted that the first terminal device is used as an example herein for description, and a communication mechanism of a terminal device participating in data transmission is the same as that of the first terminal device.

According to the method provided in this application, the adjustment of the retransmission time location can be implemented. This helps eliminate the phenomenon of unalignment between different devices caused by retransmission, and reduce the waste of time resources. In addition, retransmission scheduling may be performed in a centralized manner in a current round of data transmission, and there is no need to wait for a next round of data transmission. In this case, overheads in the procedure are reduced. At the same time, a network device in the current round may directly schedule a terminal device for retransmission, and terminal devices do not need to perform contention. In this way, that the terminal devices still need to perform contention-based access again when entering the next round can be avoided. This helps avoid the waste of resources.

According to a second aspect, a communication method is provided. The method includes: A first terminal device receives a first downlink signal from a first network device at first time, where the first time is also time at which a second terminal device receives a second downlink signal from a second network device, the first downlink signal includes first information, the second downlink signal includes second information, and a length of the first information is the same as a length of the second information. The first terminal device sends a first uplink signal to the first network device at second time, where the second time is also time at which the second terminal device sends a second uplink signal to the second network device, the first uplink signal includes third information, the second uplink signal includes fourth information, and a length of the third information is the same as a length of the fourth information.

With reference to the second aspect, in some implementations of the second aspect, if the first uplink signal is an uplink data signal, the first downlink signal includes a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted. That the first terminal device sends the first uplink signal to the first network device at the second time includes: When the maximum quantity of transmissions or the maximum quantity of retransmissions is not reached, the first terminal device sends the first uplink signal to the first network device at the second time.

With reference to the second aspect, in some implementations of the second aspect, the first uplink signal is an uplink data signal. The method further includes: The first terminal device receives first feedback information from the first network device, where the first feedback information indicates that receiving of the first uplink signal is incorrect, and indicates not to retransmit the first uplink signal.

With reference to the second aspect, in some implementations of the second aspect, the first uplink signal is an uplink data signal. The method further includes: The first terminal device receives second feedback information from the first network device, where the second feedback information indicates that receiving of the first uplink signal is correct.

With reference to the second aspect, in some implementations of the second aspect, after the first terminal device receives the second feedback information from the first network device, the method further includes: The first terminal device receives second indication information from the first network device, where the second indication information indicates the first terminal device to re-upload the first uplink signal.

With reference to the second aspect, in some implementations of the second aspect, the first time and the second time are time in a first round of data transmission; and if the first round of data transmission meets a first preset condition, the first uplink signal is transmitted once in the first round of data transmission; or if the first round of data transmission does not meet the first preset condition, the first uplink signal is transmitted at least twice in the first round of data transmission.

With reference to the second aspect, in some implementations of the second aspect, the first preset condition includes one round of data transmission in n rounds of data transmission, where n is an integer greater than or equal to 1.

With reference to the second aspect, in some implementations of the second aspect, the first round of data transmission is data transmission after first signaling and before second signaling, the first signaling is query signaling, and the second signaling is select signaling or query signaling.

With reference to the second aspect, in some implementations of the second aspect, if the first round of data transmission is an initial round of data transmission in the n rounds of data transmission, the first downlink signal further includes fifth information, and the fifth information indicates that the first round of data transmission is the initial round of data transmission.

With reference to the second aspect, in some implementations of the second aspect, the fifth information is select signaling.

With reference to the second aspect, in some implementations of the second aspect, the fifth information is a first field in select signaling or query signaling.

With reference to the second aspect, in some implementations of the second aspect, the fifth information is a first value of a first bit in select signaling or query signaling.

With reference to the second aspect, in some implementations of the second aspect, the fifth information indicates that a field indicated by the select signaling is different from a field indicated by select signaling in a latest data transmission before the first round of data transmission; or the fifth information indicates that a flag bit indicated by the query signaling is different from a flag bit indicated by query signaling in a latest data transmission before the first round of data transmission.

With reference to the second aspect, in some implementations of the second aspect, if the first round of data transmission does not meet the first preset condition, a first signal is the first uplink signal whose receiving is incorrect, and a second signal is the first uplink signal that is retransmitted, the method includes: The first terminal device sends the second signal to the first network device based on a parameter value that is the same as a parameter value of the first signal.

With reference to the second aspect, in some implementations of the second aspect, if the first round of data transmission does not meet the first preset condition, a first signal is the first uplink signal whose receiving is incorrect, and a second signal is the first uplink signal that is retransmitted, the method further includes: The first terminal device receives first indication information from the first network device, where the first indication information indicates the first terminal device to transmit the second signal based on a parameter value that is the same as a parameter value of the first signal, or the first indication information indicates the first terminal device to transmit the second signal based on a parameter value that is different from a parameter value of the first signal.

With reference to the second aspect, in some implementations of the second aspect, if the second signal is transmitted based on a first parameter value, the first indication information further includes the first parameter value, and the first parameter value includes a value of at least one of the following parameters: a transmission rate, a coding scheme, a code rate, a modulation scheme, a modulation order, a quantity of repetitions, a bandwidth, a data type, a data storage area, or a data storage location.

With reference to the second aspect, in some implementations of the second aspect, if the first time and the second time are time in the first round of data transmission, and both the first time and the second time are in first duration in the first round of data transmission, the first uplink signal is transmitted once in the first duration; or if both the first time and the second time are in second duration in the first round of data transmission, the first uplink signal is transmitted at least once in the second duration.

With reference to the second aspect, in some implementations of the second aspect, the method further includes: If the first uplink signal is an uplink data signal, the first terminal device receives the second feedback information from the first network device, where the second feedback information indicates that receiving of the first uplink signal is correct. The first terminal device does not modify a flag bit based on the second feedback information.

If failing to receive the first uplink signal or the first network device successfully receives the first uplink signal, the first network device may send the second feedback information. After receiving the second feedback information, the first terminal device cannot accurately determine whether the first uplink signal is successfully reported, and may not modify the flag bit. In subsequent data transmission, for example, in a next round of data transmission or in the second duration, whether the first uplink signal is successfully reported is determined based on indication information of the first network device. If the first uplink signal is successfully reported, the flag bit is modified. If the first uplink signal fails to be reported, the first uplink signal is retransmitted and the flag bit is not modified.

The first terminal device may determine whether the indication information of the first network device includes scheduling information of the first terminal device. If the scheduling information of the first terminal device is included, it is determined that the first uplink signal fails to be reported, the first uplink signal is retransmitted, and the flag bit is not modified. If the scheduling information of the first uplink signal is not included, it is determined that the first uplink signal is successfully reported, the first uplink signal is not retransmitted, and the flag bit is modified.

Beneficial effects of the implementations of the second aspect are the same as those of the first aspect. Details are not described herein again.

According to a third aspect, a communication apparatus is provided. The communication apparatus includes a sending unit and a receiving unit. The sending unit is configured to send a first downlink signal at first time, where the first time is also time at which a second network device sends a second downlink signal, the first downlink signal includes first information, the second downlink signal includes second information, and a length of the first information is the same as a length of the second information. The receiving unit is configured to receive a first uplink signal from a first terminal device at second time, where the second time is also time at which the second network device receives a second uplink signal from a second terminal device, the first uplink signal includes third information, the second uplink signal includes fourth information, and a length of the third information is the same as a length of the fourth information.

With reference to the third aspect, in some implementations of the third aspect, if the first uplink signal is an uplink data signal, the first downlink signal includes a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted.

With reference to the third aspect, in some implementations of the third aspect, the sending unit is further configured to: if the first uplink signal is an uplink data signal, and the first uplink signal fails to be received, send first feedback information, where the first feedback information indicates that receiving of the first uplink signal is incorrect, and indicates not to retransmit the first uplink signal.

With reference to the third aspect, in some implementations of the third aspect, the sending unit is further configured to: if the first uplink signal is an uplink data signal, and the first uplink signal fails to be received, send second feedback information, where the second feedback information indicates that receiving of the first uplink signal is correct.

With reference to the third aspect, in some implementations of the third aspect, the sending unit is further configured to send second indication information, where the second indication information indicates the first terminal device to re-upload the first uplink signal.

With reference to the third aspect, in some implementations of the third aspect, the first time and the second time are time in a first round of data transmission; and if the first round of data transmission meets a first preset condition, the first uplink signal is transmitted once in the first round of data transmission; or if the first round of data transmission does not meet the first preset condition, the first uplink signal is transmitted at least twice in the first round of data transmission.

With reference to the third aspect, in some implementations of the third aspect, the first preset condition includes one round of data transmission in n rounds of data transmission, where n is an integer greater than or equal to 1.

With reference to the third aspect, in some implementations of the third aspect, the first round of data transmission is data transmission after first signaling and before second signaling, the first signaling is query signaling, and the second signaling is select signaling or query signaling.

With reference to the third aspect, in some implementations of the third aspect, if the first round of data transmission is an initial round of data transmission in the n rounds of data transmission, the first downlink signal further includes fifth information, and the fifth information indicates that the first round of data transmission is the initial round of data transmission.

With reference to the third aspect, in some implementations of the third aspect, the fifth information is select signaling.

With reference to the third aspect, in some implementations of the third aspect, the fifth information is a first field in select signaling or query signaling.

With reference to the third aspect, in some implementations of the third aspect, the fifth information is a first value of a first bit in select signaling or query signaling.

With reference to the third aspect, in some implementations of the third aspect, the fifth information indicates that a field indicated by the select signaling is different from a field indicated by select signaling in a latest data transmission before the first round of data transmission; or the fifth information indicates that a flag bit indicated by the query signaling is different from a flag bit indicated by query signaling in a latest data transmission before the first round of data transmission.

With reference to the third aspect, in some implementations of the third aspect, if the first round of data transmission does not meet the first preset condition, a first signal is the first uplink signal whose receiving is incorrect, and a second signal is the first uplink signal that is retransmitted, the receiving unit is configured to receive, from the first terminal device, the second signal transmitted based on a parameter value that is the same as a parameter value of the first signal.

With reference to the third aspect, in some implementations of the third aspect, if the first round of data transmission does not meet the first preset condition, a first signal is the first uplink signal whose receiving is incorrect, and a second signal is the first uplink signal that is retransmitted, the sending unit is configured to send first indication information, where the first indication information indicates the first terminal device to transmit the second signal based on a parameter value that is the same as a parameter value of the first signal, or the first indication information indicates the first terminal device to transmit the second signal based on a parameter value that is different from a parameter value of the first signal.

With reference to the third aspect, in some implementations of the third aspect, if the second signal is transmitted based on a first parameter value, the first indication information further includes the first parameter value, and the first parameter value includes a value of at least one of the following parameters: a transmission rate, a coding scheme, a code rate, a modulation scheme, a modulation order, a quantity of repetitions, a bandwidth, a data type, a data storage area, or a data storage location.

With reference to the third aspect, in some implementations of the third aspect, if the first time and the second time are time in the first round of data transmission, and both the first time and the second time are in first duration in the first round of data transmission, the first uplink signal is transmitted once in the first duration; or if both the first time and the second time are in second duration in the first round of data transmission, the first uplink signal is transmitted at least once in the second duration.

According to a fourth aspect, a communication apparatus is provided. The communication apparatus includes a receiving unit and a sending unit. The receiving unit is configured to receive a first downlink signal from a first network device at first time, where the first time is also time at which a second terminal device receives a second downlink signal from a second network device, the first downlink signal includes first information, the second downlink signal includes second information, and a length of the first information is the same as a length of the second information. The sending unit is configured to send a first uplink signal to the first network device at second time, where the second time is also time at which the second terminal device sends a second uplink signal to the second network device, the first uplink signal includes third information, the second uplink signal includes fourth information, and a length of the third information is the same as a length of the fourth information.

With reference to the fourth aspect, in some implementations of the fourth aspect, if the first uplink signal is an uplink data signal, the first downlink signal includes a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted. The sending unit is further configured to: when the maximum quantity of transmissions or the maximum quantity of retransmissions is not reached, send the first uplink signal to the first network device at the second time.

With reference to the fourth aspect, in some implementations of the fourth aspect, the first uplink signal is an uplink data signal. The receiving unit is further configured to receive first feedback information from the first network device, where the first feedback information indicates that receiving of the first uplink signal is incorrect, and indicates not to retransmit the first uplink signal.

With reference to the fourth aspect, in some implementations of the fourth aspect, the first uplink signal is an uplink data signal. The receiving unit is further configured to receive second feedback information from the first network device, where the second feedback information indicates that receiving of the first uplink signal is correct.

With reference to the fourth aspect, in some implementations of the fourth aspect, the receiving unit is further configured to receive second indication information from the first network device, where the second indication information indicates to re-upload the first uplink signal.

With reference to the fourth aspect, in some implementations of the fourth aspect, the first time and the second time are time in a first round of data transmission; and if the first round of data transmission meets a first preset condition, the first uplink signal is transmitted once in the first round of data transmission; or if the first round of data transmission does not meet the first preset condition, the first uplink signal is transmitted at least twice in the first round of data transmission.

With reference to the fourth aspect, in some implementations of the fourth aspect, the first preset condition includes one round of data transmission in n rounds of data transmission, where n is an integer greater than or equal to 1.

With reference to the fourth aspect, in some implementations of the fourth aspect, the first round of data transmission is data transmission after first signaling and before second signaling, the first signaling is query signaling, and the second signaling is select signaling or query signaling.

With reference to the fourth aspect, in some implementations of the fourth aspect, if the first round of data transmission is an initial round of data transmission in the n rounds of data transmission, the first downlink signal further includes fifth information, and the fifth information indicates that the first round of data transmission is the initial round of data transmission.

With reference to the fourth aspect, in some implementations of the fourth aspect, the fifth information is select signaling.

With reference to the fourth aspect, in some implementations of the fourth aspect, the fifth information is a first field in select signaling or query signaling.

With reference to the fourth aspect, in some implementations of the fourth aspect, the fifth information is a first value of a first bit in select signaling or query signaling.

With reference to the fourth aspect, in some implementations of the fourth aspect, the fifth information indicates that a field indicated by the select signaling is different from a field indicated by select signaling in a latest data transmission before the first round of data transmission; or the fifth information indicates that a flag bit indicated by the query signaling is different from a flag bit indicated by query signaling in a latest data transmission before the first round of data transmission.

With reference to the fourth aspect, in some implementations of the fourth aspect, if the first round of data transmission does not meet the first preset condition, a first signal is the first uplink signal whose receiving is incorrect, and a second signal is the first uplink signal that is retransmitted, the sending unit is further configured to send the second signal to the first network device based on a parameter value that is the same as a parameter value of the first signal.

With reference to the fourth aspect, in some implementations of the fourth aspect, if the first round of data transmission does not meet the first preset condition, a first signal is the first uplink signal whose receiving is incorrect, and a second signal is the first uplink signal that is retransmitted, the receiving unit is further configured to receive first indication information from the first network device, where the first indication information indicates to transmit the second signal based on a parameter value that is the same as a parameter value of the first signal, or the first indication information indicates to transmit the second signal based on a parameter value that is different from a parameter value of the first signal.

With reference to the fourth aspect, in some implementations of the fourth aspect, if the second signal is transmitted based on a first parameter value, the first indication information further includes the first parameter value, and the first parameter value includes a value of at least one of the following parameters: a transmission rate, a coding scheme, a code rate, a modulation scheme, a modulation order, a quantity of repetitions, a bandwidth, a data type, a data storage area, or a data storage location.

With reference to the fourth aspect, in some implementations of the fourth aspect, if the first time and the second time are time in the first round of data transmission, and both the first time and the second time are in first duration in the first round of data transmission, the first uplink signal is transmitted once in the first duration; or if both the first time and the second time are in second duration in the first round of data transmission, the first uplink signal is transmitted at least once in the second duration.

With reference to the fourth aspect, in some implementations of the fourth aspect, the communication apparatus further includes a processing unit. The receiving unit is further configured to: if the first uplink signal is an uplink data signal, receive the second feedback information from the first network device, where the second feedback information indicates that receiving of the first uplink signal is correct. The processing unit is configured not to modify the flag bit based on the second feedback information.

According to a fifth aspect, a communication apparatus is provided, including a processor and a memory, where the memory is configured to store a computer program, the processor is configured to: invoke the computer program from the memory, and run the computer program, to enable the apparatus to perform the method according to any one of the possible implementations of the foregoing aspects.

Optionally, there are one or more processors, and one or more memories.

Optionally, the memory may be integrated with the processor, or the memory and the processor are separately disposed.

Optionally, the communication apparatus further includes a transmitter machine (transmitter) and a receiver machine (receiver). The transmitter machine and the receiver machine may be separately disposed, or may be integrated together, and are referred to as a transceiver machine (transceiver).

According to a sixth aspect, a communication system is provided, and includes the communication apparatus according to the third aspect and the communication apparatus according to the fourth aspect.

According to a seventh aspect, a communication system is provided, including a transmitter, a receiver, and a processor, where the transmitter is configured to send a signal to another apparatus, the receiver is configured to receive a signal from the another apparatus, the processor is coupled to a memory, the memory is configured to store a computer program, and when the processor invokes the computer program, the communication apparatus is caused to perform the method according to any one of the possible implementations of the foregoing aspects.

According to an eighth aspect, a chip system is provided, including a processor, configured to: invoke a computer program from a memory, and run the computer program, to enable a communication device in which the chip system is installed to perform the method according to any one of the possible implementations of the foregoing aspects.

According to a ninth aspect, a computer-readable storage medium is provided, where the computer-readable storage medium stores a computer program (which may also be referred to as code or instructions), and when the computer program is run on a computer, the computer is enabled to perform the method according to any one of the possible implementations of the foregoing aspects.

According to a tenth aspect, a computer program product is provided, where the computer program product includes a computer program (which may also be referred to as code or instructions), and when the computer program is run, a computer is enabled to perform the method according to any one of the possible implementations of the foregoing aspects.

According to an eleventh aspect, a communication apparatus is provided, including units or modules configured to perform the method according to any one of the possible implementations of the first aspect, or including units or modules configured to perform the method according to any one of the possible implementations of the second aspect.

### BRIEF DESCRIPTION OF DRAWINGS

FIG. 1 is a diagram of a communication system;
FIG. 2 is a diagram of reader clustering;
FIG. 3 is a diagram of communication in a reader clustering scenario;
FIG. 4 is a diagram of communication of a passive tag;
FIG. 5 is a diagram of a communication mode of a reader of a separated architecture;
FIG. 6 is a diagram of another communication mode of a reader of a separated architecture;
FIG. 7 is a diagram of a communication mode of a reader of an integrated architecture;
FIG. 8 is a diagram of signal transmission;
FIG. 9 is a diagram of a single tag reply;
FIG. 10 is a diagram of a tag conflict or no tag reply;
FIG. 11 is a communication diagram of a read command;
FIG. 12 is a diagram of paging;
FIG. 13 is a schematic flowchart of a communication method according to an embodiment of this application;
FIG. 14 is a diagram of communication according to an embodiment of this application;
FIG. 15 is a diagram of inventory according to an embodiment of this application;
FIG. 16 is a diagram of other inventory according to an embodiment of this application;
FIG. 17 is a diagram of still other inventory according to an embodiment of this application;
FIG. 18 is a diagram of other inventory according to an embodiment of this application;
FIG. 19 is a diagram of an initial round of data transmission according to an embodiment of this application;
FIG. 20 is a diagram of another initial round of data transmission according to an embodiment of this application;
FIG. 21 is a diagram of still another initial round of data transmission according to an embodiment of this application;
FIG. 22 is a diagram of another initial round of data transmission according to an embodiment of this application;
FIG. 23 is a diagram of feedback information according to an embodiment of this application;
FIG. 24 is a diagram of a round of data transmission according to an embodiment of this application;
FIG. 25 is a diagram of another round of data transmission according to an embodiment of this application;
FIG. 26 is a diagram of still another round of data transmission according to an embodiment of this application;
FIG. 27 is a diagram of another round of data transmission according to an embodiment of this application;
FIG. 28 is a block diagram of a communication apparatus according to an embodiment of this application; and
FIG. 29 is a block diagram of another communication apparatus according to an embodiment of this application.

### DESCRIPTION OF EMBODIMENTS

The following describes technical solutions of this application with reference to accompanying drawings.

Currently, power supply of internet of things terminals has become a hot topic in research of an internet of things. Internet of things terminals that do not rely on battery power supply are an important evolution trend of a next-generation internet of things and an enabling feature for further expanding market space of the internet of things. Currently, a passive internet of things system may include a reader (reader) and a tag communicating with each other through a wireless channel. The reader may also be referred to as a reader/writer. This is not limited in embodiments of this application.

In a scenario of the communication between the reader and the tag, there are typically a plurality of readers, and the plurality of readers may perform inventory on the tag in a specific area. Each reader may send or receive a signal. In some specific scenarios, the reader can only send a signal or receive a signal at the same time, and cannot send a signal and receive a signal at the same time. For different readers, at the same time, there may be a reader that sends a signal and a reader that receives a signal.

In this scenario, the plurality of readers may be used as a whole for inventory. For example, the plurality of readers may jointly send a downlink energy signal or communication signal at the same time. If a downlink carrier signal is sent, different readers send the downlink carrier signal in turn, in other words, one reader in the plurality of readers may send a downlink carrier signal, and other readers jointly receive an uplink communication signal at the same time.

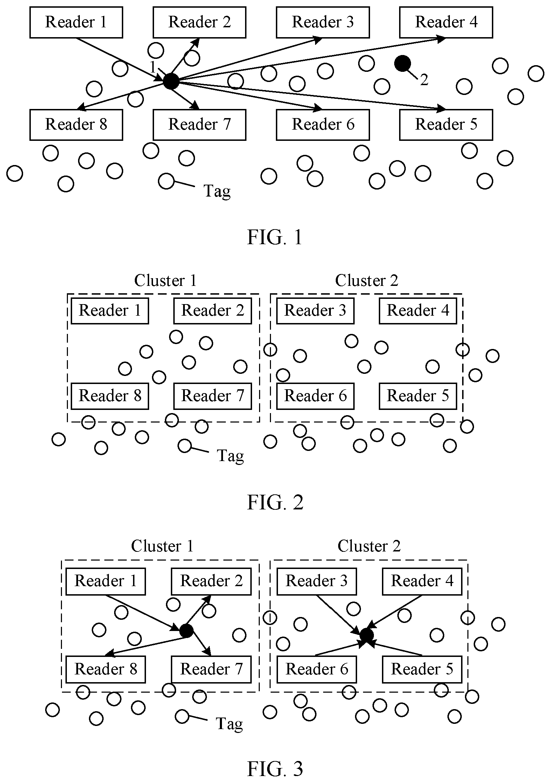

For example, FIG. 1 is a diagram of a communication system. As shown in FIG. 1, the communication system includes a plurality of readers and a plurality of tags. The plurality of readers are a reader 1, a reader 2, a reader 3, a reader 4, a reader 5, a reader 6, a reader 7, and a reader 8. In the plurality of tags, a tag filled with black is a tag for receiving a carrier signal and sending an uplink signal. In the plurality of tags, there may be one or more tags filled with black. In embodiments of this application, only one tag filled with black is used as an example for description, but embodiments of this application are not limited thereto.

In the communication system, the plurality of readers may send a downlink carrier signal in turn. As shown in FIG. 1, in a scenario, the reader 1 in the plurality of readers may send a downlink carrier signal. After receiving the carrier signal, a tag 1 filled with black may send an uplink communication signal to other readers, namely, the reader 2, the reader 3, the reader 4, the reader 5, the reader 6, the reader 7, and the reader 8. The reader 2, the reader 3, the reader 4, the reader 5, the reader 6, the reader 7, and the reader 8 jointly receive the uplink communication signal at the same time. In another scenario, the reader 2 in the plurality of readers may send a downlink carrier signal. After receiving the carrier signal, a tag 2 filled with black may send an uplink communication signal to other readers, namely, the reader 1, the reader 3, the reader 4, the reader 5, the reader 6, the reader 7, and the reader 8. The reader 1, the reader 3, the reader 4, the reader 5, the reader 6, the reader 7, and the reader 8 jointly receive the uplink communication signal at the same time.

In this implementation, only one reader can send a carrier signal at a time, in other words, the plurality of readers need to communicate with the tags in serial based on a time sequence. This leads to a small inventory capacity at a time. An inventory capacity refers to a quantity of tags successfully inventoried in a unit time.

To resolve the problem that the inventory capacity is small, an embodiment of this application provides an implementation, to increase the inventory capacity.

The plurality of readers are clustered, and each cluster is inventoried as a whole. Specifically, the plurality of readers may be divided into a plurality of clusters, and each cluster includes at least two readers. All readers in a same cluster can be inventoried as a whole. For example, all readers in the same cluster may jointly send a downlink energy signal or communication signal at the same time; and different readers in the same cluster may send a downlink carrier signal in turn. In other words, one reader in the same cluster may send a downlink carrier signal, and other readers in the same cluster jointly receive an uplink communication signal at the same time. A downlink signal or an uplink signal may be sent in parallel between different clusters, or a downlink signal or an uplink signal may be sent in serial between different clusters. This is not limited in this embodiment of this application.

For example, FIG. 2 is a diagram of reader clustering. As shown in FIG. 2, a communication system includes a plurality of readers and a plurality of tags. The plurality of readers are a reader 1, a reader 2, a reader 3, a reader 4, a reader 5, a reader 6, a reader 7, and a reader 8. The plurality of readers may be divided into two clusters: a cluster 1 and a cluster 2, where the cluster 1 includes the reader 1, the reader 2, the reader 7, and the reader 8, and the cluster 2 includes the reader 3, the reader 4, the reader 5, and the reader 6.

In the cluster 1, one reader included in the cluster 1 may send a downlink carrier signal, and other readers in the cluster 1 jointly receive an uplink communication signal. In the cluster 2, one reader included in the cluster 2 may send a downlink carrier signal, and other readers in the cluster 1 jointly receive an uplink communication signal. The reader included in the cluster 1 and the reader included in the cluster 2 may send carrier signals at the same time, or may not send carrier signals at the same time.

In this implementation, communication behaviors of readers in different clusters are not coordinated, and communication interference may exist. If a reader in a cluster sends a downlink signal, and a reader in another cluster receives an uplink signal, the reader that sends the downlink signal may receive the uplink signal sent by the reader in the another cluster. This leads to communication interference.

For example, FIG. 3 is a diagram of communication in a reader clustering scenario. As shown in FIG. 3, a cluster 1 includes a reader 1, a reader 2, a reader 7, and a reader 8. The reader 1 in the cluster 1 sends a downlink carrier signal, and other readers in the cluster 1, namely, the reader 2, the reader 7, and the reader 8, jointly receive an uplink communication signal at the same time. The cluster 2 includes a reader 3, a reader 4, a reader 5, and a reader 6. The reader 3, the reader 4, the reader 5, and the reader 6 in the cluster 2 jointly send a downlink communication signal at the same time.

The reader in the cluster 1 may receive the downlink communication signal sent by the readers in the cluster 2, and the downlink communication signal sent by the readers in the cluster 2 causes severe interference to receiving of the readers in the cluster 1. This affects transmission performance.

In view of this, an embodiment of this application provides a communication method, to avoid communication interference between different clusters while increasing an inventory capacity.

To better understand embodiments of this application, a tag and a communication mode between the tag and a reader in embodiments of this application are first described.

### 1. Tag

In an implementation architecture of a passive internet of things terminal, based on different implementations and a physical layer link and capabilities, there may be three types of passive internet of things tags: a passive tag, a semi-passive tag, and an active tag. The three terminal implementation architectures may respectively correspond to different requirements of different scenarios on terminal costs, communication distances, service functions, and the like.

The passive (Passive) tag (tag) does not generate a carrier signal, and does not have a signal amplification capability. Power consumption may be as low as about 1 microwatt. Generally, energy of a radio frequency signal transmitted by another device is collected. A communication distance is limited to 20 meters to 50 meters due to radio frequency energy transmission. This is applicable to an indoor scenario. The semi-passive (Semi-Passive) tag does not generate a carrier signal, but has a signal amplification capability. Power consumption is increased to about 100 microwatts. Usually, non-radio frequency signal energy, such as optical energy and thermal energy, in an environment is collected. Because a gain of a reverse amplification circuit is limited, a communication distance of the semi-passive tag is mainly limited by an uplink communication link budget, where the communication distance can reach 100 meters to 200 meters. This is applicable to an indoor or outdoor local area scenario. The active (Active) tag can generate a carrier signal and has a signal amplification capability. Power consumption is estimated to be 200 microwatts to 500 microwatts, and energy collection and supply are still supported. Backscatter communication is not used in uplink of the active tag. A communication distance reaches 300 meters to 500 meters. This can support an outdoor wide area scenario.

### 2. Basic communication mechanism of a passive tag

A reader sends an excitation signal to the passive tag (tag) to provide energy for the tag. The tag receives signaling or data sent by the reader, and sends the signaling or data to the reader by using a reflected signal. In this manner, the reader can identify an ID of the tag (that is, perform inventory), and perform operations such as reading and writing on the tag.

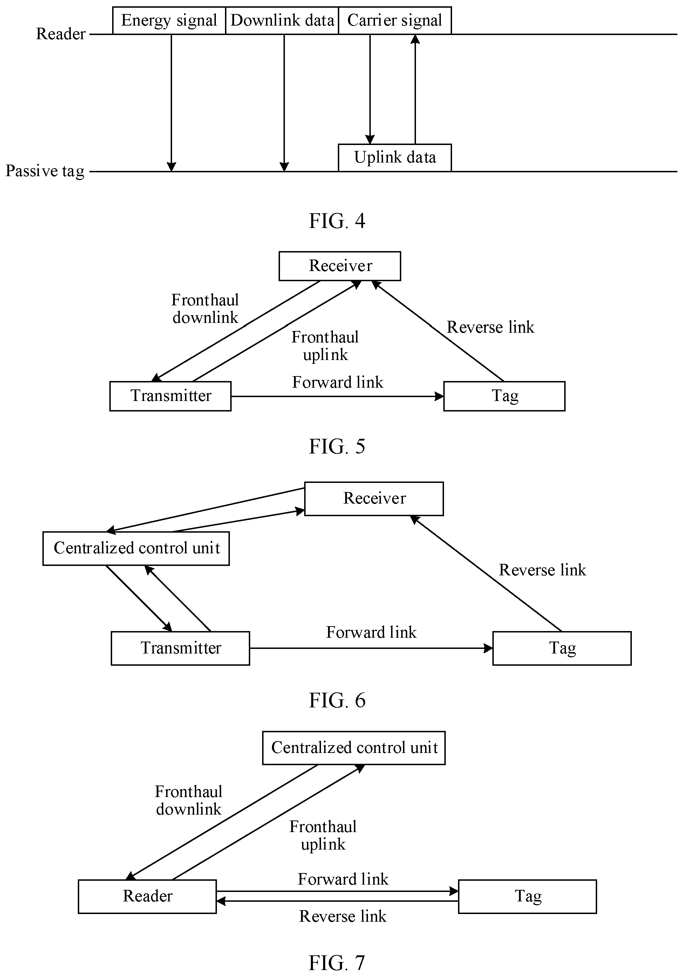

For example, FIG. 4 is a diagram of communication of a passive tag. As shown in FIG. 4, the passive tag needs a reader to send an energy signal or an excitation signal to provide energy for the tag for internal processing such as encoding and decoding, and modulation and demodulation. The passive tag further needs the reader to send a downlink communication signal, provide downlink data or signaling, and perform downlink communication with the tag. The passive tag further needs the reader to send a carrier signal, where the carrier signal is used by the tag to send uplink data or signaling for uplink communication.

### 3. Communication architecture of a reader

There are generally two types of communication architectures of the reader: a separated architecture and an integrated architecture. In the separated architecture, a reader may be divided into two parts: a helper and a receiver. The helper is responsible for sending a downlink signal (for example, a forward link or a downlink) to a tag, and the receiver is responsible for receiving an uplink signal (for example, a reverse link or an uplink) from the tag.

Currently, there are two communication modes for a reader of a separated architecture.

In one of the communication modes, the receiver generates related transmission content (data or signaling) and sends the content to the helper (fronthaul link), and the helper forwards the content over the forward link.

For example, FIG. 5 is a diagram of a communication mode of a reader of a separated architecture. As shown in FIG. 5, a receiver generates related transmission content (data or signaling), and sends a fronthaul downlink signal to a helper. After receiving the fronthaul downlink signal, the helper forwards the fronthaul downlink signal to a tag over a forward link. The tag may send an uplink signal to the receiver over a reverse link. In addition, the helper may alternatively send a fronthaul uplink signal to the receiver.

In the other communication mode, a centralized control unit generates related transmission content (data or signaling), and sends the content to the helper (fronthaul link), and the helper forwards the content over the forward link. In addition, the centralized control unit controls the receiver to receive an uplink signal.

For example, FIG. 6 is a diagram of another communication mode of a reader of a separated architecture. As shown in FIG. 6, a centralized control unit generates related transmission content (data or signaling) and sends the content to a helper (fronthaul link), and the helper forwards the content to a tag over a forward link. The tag sends an uplink signal to a receiver over a reverse link. After receiving the uplink signal, the receiver forwards the uplink signal to the centralized control unit.

If the reader of the separated architecture includes a plurality of helpers, different signals such as an energy signal, a communication signal, and a carrier signal may be sent by different helpers.

A reader of an integrated architecture may also be referred to as a reader of a centralized architecture. In addition to signal transmission between the reader of the integrated architecture and a tag over a forward link and a reverse link, the reader of the integrated architecture may also communicate with a centralized control unit (for example, a base station). The centralized control unit may perform specific scheduling, control, and the like on forward link resources used by the reader of the integrated architecture and sending behaviors of the reader of the integrated architecture. Alternatively, the reader of the integrated architecture may be for forwarding data to the tag or receiving data.

For example, FIG. 7 is a diagram of a communication mode of a reader of an integrated architecture. As shown in FIG. 7, a centralized control unit may send, to a reader, a downlink signal that is first to be sent, to control the reader to send a downlink signal to a tag over a forward link. The tag may send an uplink signal to the reader over a reverse link.

Both the helper in the separated architecture or the reader of the integrated architecture may perform continuous transmission over a forward link. For example, the helper in the separated architecture or the reader of the integrated architecture may send an energy signal, send a communication signal (for example, Query-type signaling, such as query signaling and QueryRep signaling), or send a carrier signal. The carrier signal is generally a monophonic signal, or is referred to as a continuous wave (CW, Continuous Wave) signal. The energy signal may be a signal in a same form as the carrier signal, or a signal in a different form than the carrier signal. This is not limited in embodiments of this application.

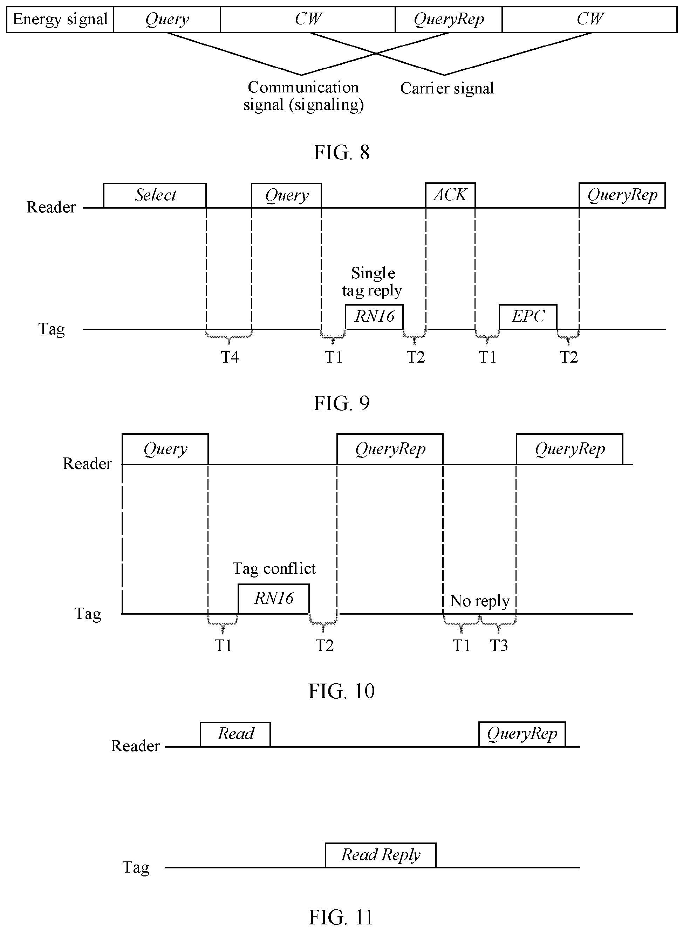

For example, FIG. 8 is a diagram of signal transmission. As shown in FIG. 8, a reader or a helper may continuously transmit an energy signal, a communication signal Query, a CW signal (namely, a carrier signal), a communication signal QueryRep, and a CW signal over a forward link.

### 4. Communication procedure in which a reader identifies an ID of a tag (that is, inventory)

A reader of an integrated architecture is used as an example for description. This is similar to that of a reader of a separated architecture (where when a signal is sent, the reader is equivalent to a helper; and when a signal is received, the reader is equivalent to a receiver).

When the reader performs inventory on the tag, the tag can make a single tag reply. FIG. 9 is a diagram of a single tag reply. As shown in FIG. 9, a reader sends select signaling, where the select signaling includes all or a part of a specific ID of at least one tag, and indicates how the at least one tag changes a value of an inventory flag bit. After receiving the select signaling, a tag may determine whether the tag matches all or a part of the ID included in the select signaling. If the tag matches all or a part of the ID, the tag may adjust the value of the inventory flag bit based on an indication in the select signaling. After sending the select signaling, the reader may send query signaling after duration T4. The query signaling is used to initialize an inventory procedure, may indicate that a tag whose inventory flag bit is a specific value participates in the inventory procedure, and may further indicate a range or a maximum value of a value of a counter (counter). The tag receives the query signaling, determines whether a value of an inventory flag bit of the tag is the same as the value of the inventory flag bit indicated by the query signaling, and if the value of the inventory flag bit of the tag is the same as the value of the inventory flag bit indicated by the query signaling, randomly selects a value from the range or the maximum value that is of the value of the counter and that is indicated by the query signaling, to initialize a counter of the tag. When a value of the counter of the tag is 0, the tag selects a 16-bit random number as a temporary ID, that is, an RN16, and sends the temporary ID to the reader. If the reader successfully receives the RN16 fed back by the single tag, it indicates that inventory is normal, and the reader may send an acknowledgment message (ACK), for acknowledgment for the feedback of the tag. After receiving the ACK, the tag may send EPC signaling to the reader, where the EPC signaling includes an ID of the tag.

If successfully receiving the EPC, the reader may make a reply indicating that the EPC is successfully received. Currently, there are two possible implementations. In one of the possible implementations, if successfully receiving the EPC, the reader may send feedback signaling to the tag, where the feedback signaling indicates that the EPC is successfully received. In the other possible implementation, if successfully receiving the EPC, the reader may directly send a next instruction. For example, as shown in FIG. 9, the reader may directly send QueryRep signaling. After receiving the QueryRep signaling, the tag may determine that the EPC is successfully sent, that is, inventory is successful, and modify a flag bit or a status bit of the tag (for example, negate the flag bit or the status bit from a state A to a state B), and does not participate in a subsequent inventory procedure. If a tag with a counter of a non-zero value exists, after receiving the QueryRep signaling, the tag may decrease the value of the counter of the tag by 1, that is, the counter is decreased by 1. When the tag determines that the value of the counter is 0, the tag selects a 16-bit random number as a temporary ID, that is, an RN16, sends the temporary ID to the reader, and repeats the signaling exchange shown in FIG. 9.

If failing to receive the EPC, the reader may make a reply indicating that the EPC fails to be received. Currently, there are two possible implementations. In one of the possible implementations, if the reader fails to receive the EPC, the reader may send feedback signaling, where the feedback signaling may indicate the tag to perform retransmission. The tag receives the feedback signaling and retransmits the EPC. In the other possible implementation, if the reader fails to receive the EPC, the reader sends NAK signaling, where the NAK signaling indicates that the EPC fails to be received. The tag receives the NAK, may determine that current inventory fails, does not negate an inventory flag bit, and waits to participate in a next inventory procedure.

In the diagram shown in FIG. 9, T1 is a time interval between time when the reader ends sending signaling and time when the tag starts sending signaling, T4 is a time interval between time when the reader ends sending signaling and time when a next piece of signaling starts (where the tag has no feedback signaling during the interval), T3 is an additional waiting delay when the reader performs inventory and there is no tag feedback, and T2 is a time interval between time when the tag ends sending signaling and time when the reader starts sending signaling.

In the diagram shown in FIG. 9, the select signaling is optional.

When the reader performs inventory on the tag, a case of a tag conflict or no tag reply may exist. FIG. 10 is a diagram of a tag conflict or no tag reply. As shown in FIG. 10, a reader sends query signaling, where the query signaling may indicate that a tag whose inventory flag bit is a specific value participates in an inventory procedure, and may further indicate a range or a maximum value of a value of a counter (counter). A tag receives the query signaling, determines whether a value of an inventory flag bit of the tag is the same as the value of the inventory flag bit indicated by the query signaling, and if the value of the inventory flag bit of the tag is the same as the value of the inventory flag bit indicated by the query signaling, randomly selects a value from the range or the maximum value that is of the value of the counter and that is indicated by the query signaling, to initialize a counter of the tag. When a value of the counter of the tag is 0, the tag selects a 16-bit random number as a temporary ID, that is, an RN16, and sends the temporary ID to the reader. If a large quantity of tags each feed back an RN16 to the reader, when the reader cannot parse the RN16, it indicates that a tag conflict occurs. In this case, the reader does not send ACK signaling, but directly sends QueryRep signaling, skips conflicting tags, and directly performs a subsequent inventory procedure. If the reader does not detect the RN16 fed back by the tag, the reader may directly perform a subsequent inventory procedure, for example, the reader directly sends QueryRep signaling.

In the diagram shown in FIG. 10, T1 is a time interval between time when the reader ends sending signaling and time when the tag starts sending signaling, T4 is a time interval between time when the reader ends sending signaling and time when a next piece of signaling starts (where the tag has no feedback signaling during the interval), T3 is an additional waiting delay when the reader performs inventory and there is no tag feedback, and T2 is a time interval between time when the tag ends sending signaling and time when the reader starts sending signaling.

After the reader and the tag successfully perform inventory, the reader may further perform unicast communication with the tag. For example, the reader performs data communication operations such as reading and writing or another operation on the tag. In embodiments of this application, a read command as an example is used for brief description. FIG. 11 is a communication diagram of a read command. As shown in FIG. 11, a reader sends a read (read) command to a tag, where the read command is used to read content in a specific storage area of the tag. After receiving the read command, the tag may send a read reply (reader reply) command to the reader, and feed back, to the reader, data content that is in the storage area and that the reader expects to read. The reader may further continue to send a read command to read other data content in the storage area of the tag, or send another command to the tag to perform another operation on the tag. When the unicast communication ends, the reader may send a QueryRep/QueryAdjust/Query command based on a normal inventory procedure. After receiving the command, the tag learns that the unicast communication for the tag has ended.

### 6. Paging communication procedure

A reader of an integrated architecture is used as an example for description. This is similar to a reader of a separated architecture (the reader is equivalent to a helper in signal sending; and the reader is equivalent to a receiver in signal receiving).

For an inventory procedure, each tag needs to select a random number, perform contention-based access, and report an ID (for example, an EPC) of the tag. Different from the inventory procedure, for the paging procedure, the reader has learnt of an ID of a specific tag, expects to find the tag based on the ID, and requires the tag to report data (for example, data of a tag transmitter).

Specifically, the reader includes all or a part of an ID (for example, an electronic product code (electronic product code, EPC) or a tag identifier (tag identifier, TID)) of a tag in paging (paging) signaling, or a specific truncated format of an ID of a tag. Optionally, the paging signaling may further indicate a related transmission parameter for subsequently sending uplink data by the tag, for example, a parameter like a transmission rate, a coding scheme, a code rate, a modulation scheme, a modulation order, a quantity of repetitions, bandwidth, a data type, or a data storage area or location. After receiving the paging signaling, a tag determines whether the ID included in the paging signaling is an ID of the tag (for example, whether IDs are the same) or whether the included ID is related to the tag (for example, whether the included ID is a part of an ID of the tag, or a truncated format of an ID of the tag), and sends uplink data (UL data) to the reader if the ID included in the paging signaling is the ID of the tag or is related to the tag. Optionally, the tag may alternatively send uplink data to the reader based on the transmission parameter included in the paging signaling. If the uplink data is correctly received, the reader may send feedback signaling to the tag to indicate the success, or directly send a next piece of signaling (for example, paging signaling for another tag). After receiving the feedback signaling, the tag learns that the uplink data is successfully sent, and retransmission is not needed. If receiving of the uplink data is incorrect, the reader sends feedback signaling to the tag to indicate the failure and indicate to perform retransmission. After receiving the feedback signaling, the tag learns that the uplink data fails to be sent, and performs retransmission.

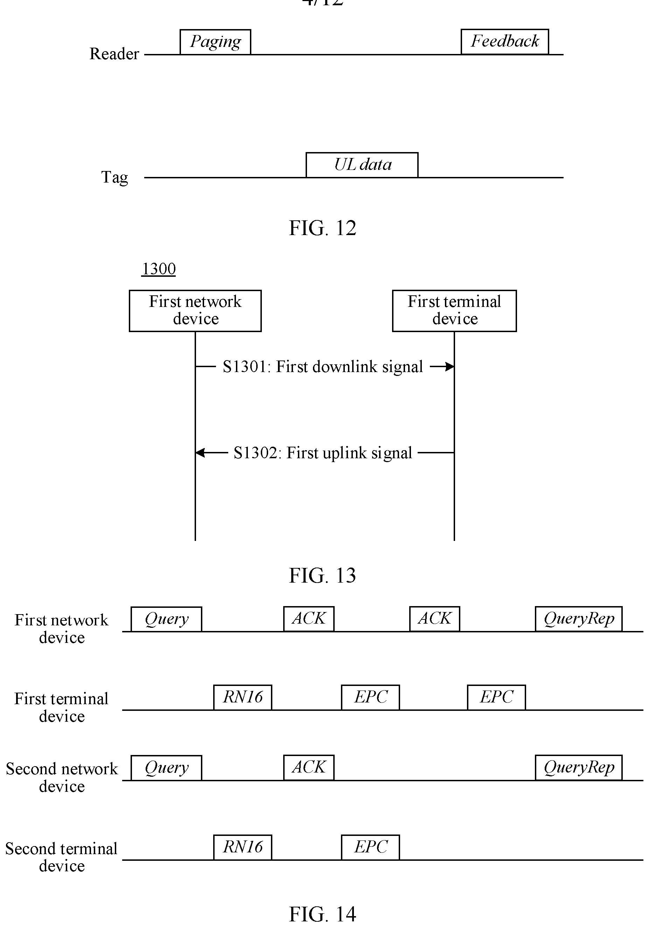

For example, FIG. 12 is a diagram of paging. As shown in FIG. 12, a reader sends paging signaling to a tag, where the paging signaling includes all or a part of an ID of a tag. The tag receives the paging signaling, determines whether the ID included in the paging signaling is an ID of the tag or whether the ID is related to the tag, and sends UL data to the reader if the ID included in the paging signaling is the ID of the tag or the ID is related to the tag. The reader receives the UL data. If the reader successfully receives the UL data, the reader may send feedback signaling to the tag to indicate the success, or directly send a next piece of signaling (for example, paging signaling for another tag). After receiving the feedback signaling, the tag learns that the uplink data is successfully sent and retransmission is not needed. If failing to receive the UL data, the reader sends feedback signaling to the tag to indicate the failure and indicate to perform retransmission. After receiving the feedback signaling, the tag learns that the uplink data fails to be sent, and performs retransmission.

The following describes in detail the communication method provided in embodiments of this application.

The communication method provided in embodiments of this application may be applied to a passive internet of things scenario, and may be further applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a worldwide interoperability for microwave access (worldwide interoperability for microwave access, WiMAX) communication system, or another evolved communication system. In various communication systems, a network device may be a device configured to communicate with a terminal device. The network device may also be referred to as an access network device or a radio access network device, may be a transmission reception point (transmission reception point, TRP), may be an evolved NodeB (evolved NodeB, eNB, or eNodeB) in the LTE system, may be a home NodeB (for example, a home evolved NodeB, or a home NodeB, HNB), a baseband unit (baseband unit, BBU), or may be a radio controller in a cloud radio access network (cloud radio access network, CRAN) scenario. Alternatively, the first network device may be a relay station, an access point, a vehicle-mounted device, a wearable device, a network device in a 5G network, a network device in a future evolved PLMN network, or the like, may be an access point (access point, AP) in a WLAN, may be a gNB in the new radio (new radio, NR) system, may be a satellite base station in a satellite communication system, may be a device that bears a base station function and that has various forms, or the like. This is not limited in embodiments of this application.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, an unmanned aerial vehicle, a terminal device in a 5G network, a terminal device in a future evolved public land mobile communication network (public land mobile network, PLMN), or the like. This is not limited in embodiments of this application.

In addition, in embodiments of this application, the terminal device may alternatively be a terminal device, for example, a tag, in an internet of things (internet of things, IoT) system. An IoT is an important part of future development of information technologies. A main technical feature of the IoT is to connect things to a network by using a communication technology, to implement an intelligent network with human-machine interconnection and thing-thing interconnection.

For example, FIG. 13 is a schematic flowchart of a communication method 1300 according to an embodiment of this application. As shown in FIG. 13, the method 1300 may include the following steps.

S1301: A first network device sends a first downlink signal at first time. Correspondingly, a first terminal device receives the first downlink signal at the first time. The first time is also time at which a second network device sends a second downlink signal, the first downlink signal includes first information, the second downlink signal includes second information, and a length of the first information is the same as a length of the second information.

In a passive internet of things scenario, the first network device may be a reader. In various communication systems, the first network device may be a core network device or a physical layer device.

The first time is also the time at which the second network device sends the second downlink signal. In other words, the first time is also time at which the second terminal device receives the second downlink signal from the second network device. At the first time, the first network device sends the first downlink signal, and the second network device sends the second downlink signal. In other words, at a same time point or in a same time period, all different network devices are sending downlink signals. In other words, downlink communication behaviors of the different network devices are consistent or synchronous. It may be understood that, in this embodiment of this application, an example in which the first network device and the second network device synchronously send downlink signals is used for description. A quantity of synchronous network devices is not limited in this embodiment of this application.

The first downlink signal includes the first information, the second downlink signal includes the second information, and the length of the first information is the same as the length of the second information. In other words, lengths of downlink signals sent by different network devices are the same. This helps cause duration of sending the signals by the different network devices to be the same, and shorten waiting duration of the different network devices.

In some scenarios, if the length of the first information is different from the length of the second information, and the length of the first information is shorter than the length of the second information, the first network device may perform padding on the first information. In this way, a length of padded information is the same as the length of the second information, or time at which the first network device sends the first information is later than time at which the second network device sends the second information, to ensure that sending of the first information and sending of the second information are completed at the same time. It may be understood that if the length of the first information is different from the length of the second information, and the length of the first information is longer than the length of the second information, the second network device may perform padding on the second information. In this way, a length of padded information is the same as the length of the first information, or time at which the second network device sends the second information is later than time at which the first network device sends the first information, to ensure that sending of the first information and sending of the second information are completed at the same time.

For example, if the length of the first information is shorter than the length of the second information, the first network device may pad the first information with "0" or "1", so that a length of padded information is the same as the length of the second information. If the length of the first information is longer than the length of the second information, the second network device may pad the second information with "0" or "1", so that a length of padded information is the same as the length of the first information.

The first information and the second information may be information of a same type, or may be information of different types. This is not limited in this embodiment of this application.

If the first information and the second information are information of a same type, it may indicate that the first network device and the second network device are completely synchronous. If this is applied to the foregoing inventory procedure, the first network device and the second network device may send Query commands, ACK commands, or the like at the same time. The first network device and the second network device may further send energy signals, carrier signals, or the like at the same time.

If the first information and the second information are information of different types, it may indicate that the first network device and the second network device perform sending or receiving at the same time, but send different commands or receive different data. If this is applied to the foregoing inventory procedure, the first network device may send a Query command, and the second network device may send an ACK command, where a length of the Query command and a length of the ACK command are the same.

S1302: The first terminal device sends a first uplink signal to the first network device at second time based on the first downlink signal. Correspondingly, the first network device receives the first uplink signal at the second time. The second time is also time at which the second terminal device sends a second uplink signal to the second network device, the first uplink signal includes third information, the second uplink signal includes fourth information, and a length of the third information is the same as a length of the fourth information.

In the passive internet of things scenario, the first terminal device may be a tag. In various communication systems, the first terminal device may be a device like a mobile phone, a tablet computer, or a notebook computer. The first terminal device is a terminal device that receives the first downlink signal and that can make a reply. The first terminal device may be one terminal device, or may be a plurality of terminal devices. This is not limited in this embodiment of this application.

The second time is also the time at which the second terminal device sends the second uplink signal to the second network device. In other words, the second time is also time at which the second network device receives the second uplink signal from the second terminal device. At the second time, the first terminal device sends the first uplink signal to the first network device, and the second terminal device sends the second uplink signal to the second network device. In other words, all different terminal devices are sending uplink signals at a same time point or in a same time period. In other words, uplink communication behaviors of the different terminal devices are consistent or synchronous. It may be understood that, in this embodiment of this application, an example in which the first terminal device and the second terminal device synchronously send uplink signals is used for description. A quantity of synchronous terminal devices is not limited in this embodiment of this application.

The first uplink signal includes the third information, the second uplink signal includes the fourth information, and the length of the third information is the same as the length of the fourth information. In other words, lengths of uplink signals sent by different terminal devices are the same. This helps cause duration of sending the signals by the different terminal devices to be the same, and shorten waiting duration of the different terminal devices.

The third information and the fourth information may be information of a same type, or may be information of different types. This is not limited in this embodiment of this application.

If the third information and the fourth information are information of a same type, it may indicate that the first terminal device and the second terminal device are completely synchronous. If this is applied to the foregoing inventory procedure, the first terminal device and the second terminal device may send RN16s, EPCs, or the like at the same time. In the clustering scenario shown in FIG. 2, the first terminal device and the first network device in this embodiment of this application may be devices in the cluster 1, and the second terminal device and the second network device may be devices in the cluster 2. Coordination is performed between the cluster 1 and the cluster 2, so that uplink and downlink communication behaviors between the clusters are consistent or synchronous.

For example, FIG. 14 is a diagram of communication. As shown in FIG. 14, when the first network device sends a Query command to the first terminal device, the second network device also sends a Query command to the second terminal device. When the first terminal device sends an RN16 to the first network device, the second terminal device also sends an RN16 command to the second network device. When the first network device sends an ACK to the first terminal device, the second network device also sends an ACK to the second terminal device. When the first terminal device sends an EPC to the first network device, the second terminal device also sends an EPC to the second network device.

If failing to receive the EPC, the first network device sends an ACK to the first terminal device to indicate the first terminal device to retransmit the EPC. If the second network device successfully receives the EPC, the second network device starts waiting. The first terminal device sends the EPC to the first network device based on the ACK. The first network device successfully receives the EPC, and sends a QueryRep command to the first terminal device. At this time, the second network device may also send a QueryRep command to the first terminal device.

In the communication scenario shown in FIG. 14, the first network device and the second network device send downlink communication signals at the same time, and receive uplink communication signals at the same time. Optionally, if both the first terminal device and the second terminal device are passive tags, the first network device and the second network device also send downlink energy signals, downlink carrier signals, and the like at the same time.

According to the method provided in this embodiment of this application, uplink and downlink communication behaviors of the first network device and the second network device are synchronous, so that a coverage capability can be improved, and communication efficiency can be improved. In addition, lengths of information included in uplink communication and downlink communication of the first network device and the second network device are the same. This helps shorten waiting duration of different network devices and avoid a waste of time resources. If this is applied to an inventory scenario, an inventory capacity can be increased.

In the passive internet of things scenario or various communication systems, that a network device indicates a terminal device to perform retransmission has specific randomness. When a retransmission behavior occurs, to ensure consistency of uplink and downlink communication behaviors between different network devices, waiting time of the network devices may be increased. To avoid long waiting time of different network devices, this embodiment of this application provides a communication method, to adjust a retransmission time location by controlling a quantity of retransmissions of a terminal device, eliminate a phenomenon of slot unalignment between different devices caused by retransmission, and reduce the waste of time resources.

This embodiment of this application provides three possible implementations, to control the quantity of retransmissions of the terminal device.

In a first possible implementation, if the first uplink signal is an uplink data signal, the first downlink signal includes a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted. S302 in which the first terminal device sends the first uplink signal to the first network device at the second time includes: When the maximum quantity of transmissions or the maximum quantity of retransmissions is not reached, the first terminal device sends the first uplink signal to the first network device at the second time.

The first uplink signal is an uplink data signal, in other words, the first terminal device sends data to the first network device by using the first uplink signal. For example, the first uplink signal may be an EPC. The first uplink signal is an uplink data signal. If failing to receive the first uplink signal, the first network device may indicate the first terminal device to retransmit the first uplink signal.

The first downlink signal includes the maximum quantity of transmissions or the maximum quantity of retransmissions. In other words, the first network device indicates, by using the first downlink signal, a quantity of times that the first terminal device transmits the first uplink signal, and the first terminal device may select, based on the indicated quantity of transmissions, whether the first uplink signal needs to be retransmitted. The maximum quantity of transmissions may be an integer greater than or equal to 1, and the maximum quantity of retransmissions may be an integer greater than or equal to 0. If the maximum quantity of transmissions is 1 or the maximum quantity of retransmissions is 0, the first terminal device transmits the first uplink signal only once.

If failing to receive the first uplink signal, the first network device sends feedback information to the first terminal device, to indicate the first terminal device to retransmit the first uplink signal. The first terminal device may determine, based on the feedback information, whether a quantity of transmissions of the first uplink signal reaches the maximum quantity of transmissions, or whether a quantity of retransmissions of the first uplink signal reaches the maximum quantity of retransmissions. If the maximum quantity of transmissions or the maximum quantity of retransmissions is not reached, the first terminal device may send the first uplink signal to the first network device based on the feedback information sent by the first network device. If the maximum quantity of transmissions or the maximum quantity of retransmissions is reached, the first terminal device does not send the first uplink signal to the first network device based on the feedback information sent by the first network device. In other words, the first terminal device does not retransmit the first uplink signal.

If the first network device is a reader, and the first terminal device is a tag, in an inventory process, the first downlink signal may be common signaling or common information, for example, a Select command or a Query command. The reader indicates, by using the Select command or the Query command, the maximum quantity of transmissions or the maximum quantity of retransmissions of the first uplink signal performed by the tag. After the maximum quantity of transmissions or the maximum quantity of retransmissions is reached, even if receiving feedback information indicating that receiving of the uplink is incorrect and indicating that the uplink needs to be retransmitted, the tag does not perform retransmission and does not modify a flag bit. The tag does not modify the flag bit and may continue to participate in a subsequent inventory procedure.

The tag may determine, via a counter, whether the maximum quantity of retransmissions or the maximum quantity of transmissions is reached. For example, the tag initializes the counter to 0 before sending the first uplink signal. Each time the first uplink signal is transmitted, a value of the counter is increased by 1. Each time the first uplink signal is to be transmitted, the counter is used to determine whether the maximum quantity of transmissions is reached. Alternatively, the tag initializes the counter to 0 before sending retransmission of the first uplink signal. Each time the first uplink signal is retransmitted, a value of the counter is increased by 1. Each time the first uplink signal is to be retransmitted, the counter is used to determine whether the maximum quantity of retransmissions is reached.

In a second possible implementation, if the first uplink signal is an uplink data signal, and the first network device fails to receive the first uplink signal, the first network device sends first feedback information, where the first feedback information indicates that receiving of the first uplink signal is incorrect, and indicates not to retransmit the first uplink signal. Correspondingly, the first terminal device receives the first feedback information.

The first network device may control, by using the first feedback information, the first terminal device not to perform retransmission, to limit a quantity of transmissions of the first uplink signal. The first network device may control, by using the first feedback information, the first terminal device to transmit the first uplink signal once. Specifically, if the first network device fails to receive the first uplink signal, the first network device may send the first feedback information to the first terminal device, to indicate that receiving of the first uplink signal is incorrect, and indicate not to retransmit the first uplink signal. After receiving the first feedback information, the first terminal device does not retransmit the first uplink signal. In this case, the first terminal device transmits the first uplink signal only once, and the first network device fails to receive the first uplink signal.

The first network device may control, by using the first feedback information, the first terminal device to transmit the first uplink signal twice. Specifically, if the first network device fails to receive the first uplink signal, the first network device may send feedback information to the first terminal device to indicate that receiving of the first uplink signal is incorrect, and indicate to retransmit the first uplink signal. After receiving the feedback information, the first terminal device may send the first uplink signal to the first network device. If the first network device still fails to receive the first uplink signal, the first network device may send the first feedback information to indicate that receiving of the first uplink signal is incorrect, and indicate not to retransmit the first uplink signal. After receiving the first feedback information, the first terminal device does not retransmit the first uplink signal. In the inventory scenario, the first terminal device may not modify a flag bit based on the first feedback information, to continue to participate in a subsequent inventory procedure. This is similar for other times, and details are not listed one by one herein. In this case, the first terminal device transmits the first uplink signal twice, and the first network device fails to receive the first uplink signal.

In this implementation, the first network device may set a quantity of retransmissions of the first uplink signal. If the quantity of retransmissions of the first uploaded signal reaches a specified value, and the first network device still fails to receive the first uplink signal, the first network device may send the first feedback information.

In a third possible implementation, if the first uplink signal is an uplink data signal, and the first network device fails to receive the first uplink signal, the first network device sends second feedback information, where the second feedback information indicates that receiving of the first uplink signal is correct. Correspondingly, the first terminal device receives the second feedback information.

The first network device may control, by using the second feedback information, the first terminal device not to perform retransmission, to limit a quantity of transmissions of the first uplink signal. When receiving the second feedback information, the first terminal device may consider that the first uplink signal does not need to be transmitted, and does not perform retransmission. In the inventory scenario, the first terminal device may modify a flag bit based on the second feedback information.

The first network device may control, by using the second feedback information, the first terminal device to transmit the first uplink signal once. Specifically, if the first network device fails to receive the first uplink signal, the first network device may send the second feedback information to the first terminal device, to indicate that receiving of the first uplink signal is correct. After receiving the second feedback information, the first terminal device does not retransmit the first uplink signal. In this case, the first terminal device transmits the first uplink signal only once, and the first network device fails to receive the first uplink signal.

The first network device may control, by using the second feedback information, the first terminal device to transmit the first uplink signal twice. Specifically, if the first network device fails to receive the first uplink signal, the first network device may send feedback information to the first terminal device to indicate that receiving of the first uplink signal is incorrect, and indicate to retransmit the first uplink signal. After receiving the feedback information, the first terminal device may send the first uplink signal to the first network device. If the first network device still fails to receive the first uplink signal, the first network device may send the second feedback information to indicate that receiving of the first uplink signal is correct. After receiving the second feedback information, the first terminal device does not retransmit the first uplink signal. In this case, the first terminal device transmits the first uplink signal twice, and the first network device fails to receive the first uplink signal. This is similar for other times, and details are not listed one by one herein.

In this implementation, the first network device may set a quantity of retransmissions of the first uplink signal. If the quantity of retransmissions of the first uploaded signal reaches a specified value, and the first network device still fails to receive the first uplink signal, the first network device may send the second feedback information.

Optionally, after the first network device sends the second feedback information, the method may further include: The first network device sends second indication information, where the second indication information indicates the first terminal device to re-upload the first uplink signal. The first terminal device receives the second indication information, and may send the first uplink signal to the first network device.

After receiving the second feedback information, the first terminal device modifies the flag bit, and does not participate in a subsequent inventory procedure. However, the first uplink signal fails to be received. To ensure that the first network device successfully receives the first uplink signal, the first network device may send the second indication information. After receiving the second indication information, the first terminal device may send the first uplink signal to the first network device, so that the first network device successfully receives the first uplink signal.

In all of the foregoing three implementations, the quantity of retransmissions of the first uplink signal is limited. This implements the adjustment of the retransmission time location, eliminates the phenomenon of slot unalignment between different devices caused by retransmission, and reduces the waste of time resources.

In an optional embodiment, the first time and the second time are time in a first round of data transmission; and if the first round of data transmission meets a first preset condition, the first uplink signal is transmitted once in the first round of data transmission; or if the first round of data transmission does not meet the first preset condition, the first uplink signal is transmitted at least twice in the first round of data transmission.

The first round of data transmission indicates one complete data transmission procedure, and the first round of data transmission represents only one round of data transmission, and does not represent a sequence. That first time and the second time are time in the first round of data transmission may indicate that S1301 and S1302 are in a same data transmission procedure. If this round of data transmission meets the first preset condition, the first network device may control, by using any one of the foregoing three implementations, the first uplink signal to be transmitted once in this round of data transmission. If this round of data transmission does not meet the first preset condition, the first network device may control, by using any one of the foregoing three implementations, the first uplink signal to be transmitted at least twice in this round of data transmission. If this round of data transmission does not meet the first preset condition, a specific quantity of transmissions of the first uplink signal may be a preset value greater than or equal to 2, or may be a value until the first network device successfully receives the first uplink signal. This is not limited in this embodiment of this application.

For example, in the first implementation, if the first round of data transmission meets the first preset condition, the maximum quantity of transmissions indicated by the first downlink signal is 1, or the maximum quantity of retransmissions is 0. If the first round of data transmission does not meet the first preset condition, the maximum quantity of transmissions indicated by the first downlink signal is greater than 1, or the maximum quantity of retransmissions is greater than 0.

According to the communication method provided in embodiments of this application, when the first preset condition is met, the first uplink signal may be transmitted only once in one complete data transmission procedure. This helps implement the adjustment of the retransmission time location, eliminate the phenomenon of slot unalignment between different devices caused by retransmission, and reduce the waste of time resources. When the first preset condition is not met, the first uplink signal may be transmitted at least twice in one complete data transmission procedure. This helps the first network device quickly obtain data.

Optionally, the first preset condition includes one round of data transmission in n rounds of data transmission, where n is an integer greater than or equal to 1.

In this embodiment of this application, it is preset that the first uplink signal is transmitted only once in each of the n rounds of data transmission. If the first round of data transmission belongs to any one of the n rounds of data transmission, the first uplink signal is transmitted once in the first round of data transmission. If the first round of data transmission is any round of data transmission other than the n rounds of data transmission, the first uplink signal is transmitted at least twice in the first round of data transmission.

Optionally, the n rounds of data transmission may be first n rounds of data transmission when data transmission starts. The n rounds of data transmission may be continuous, or may be discontinuous. This is not limited in this embodiment of this application.

For example, the first network device performs inventory for 100 terminal devices. The first terminal device may be one of the 100 terminal devices. The first network device may perform inventory by using the 100 terminal devices as a whole, and the first uplink signal may be transmitted only once in each of the first n rounds of data transmission. If the first network device first performs inventory on 50 terminal devices in the 100 terminal devices, and the first uplink signal is transmitted only once in each round of data transmission in first n/2 rounds of data transmission, when the first network device performs inventory on subsequent 50 terminal devices, the first uplink signal is transmitted only once in each round of data transmission in the first n/2 rounds of data transmission.

According to the communication method provided in embodiments of this application, the first uplink signal may be transmitted only once in each of the n rounds of data transmission. In the n rounds of data transmission, this helps implement the adjustment of the retransmission time location, eliminate the phenomenon of slot unalignment between different devices caused by retransmission, and reduce the waste of time resources.

Optionally, the first round of data transmission is data transmission after first signaling and before second signaling, the first signaling is query signaling, and the second signaling is select signaling or query signaling.

The first signaling may be considered as a start of one round of data transmission, the second signaling may be considered as an end of one round of data transmission, and communication between the first signaling and the second signaling may be referred to as a round of data transmission. The first signaling may be query signaling, and the second signaling may be select signaling or query signaling.

In the inventory scenario, the first uplink signal may be an EPC. The first terminal device may transmit the EPC only once in each of n rounds of inventory, and transmit the EPC at least twice in each round of inventory other than the n rounds of inventory. In other words, for the EPC, the first terminal device performs only initial transmission in each of the n rounds of inventory, and performs retransmission in each round of inventory other than the n rounds of inventory. Communication of the second terminal device and communication of the first terminal device are synchronous.

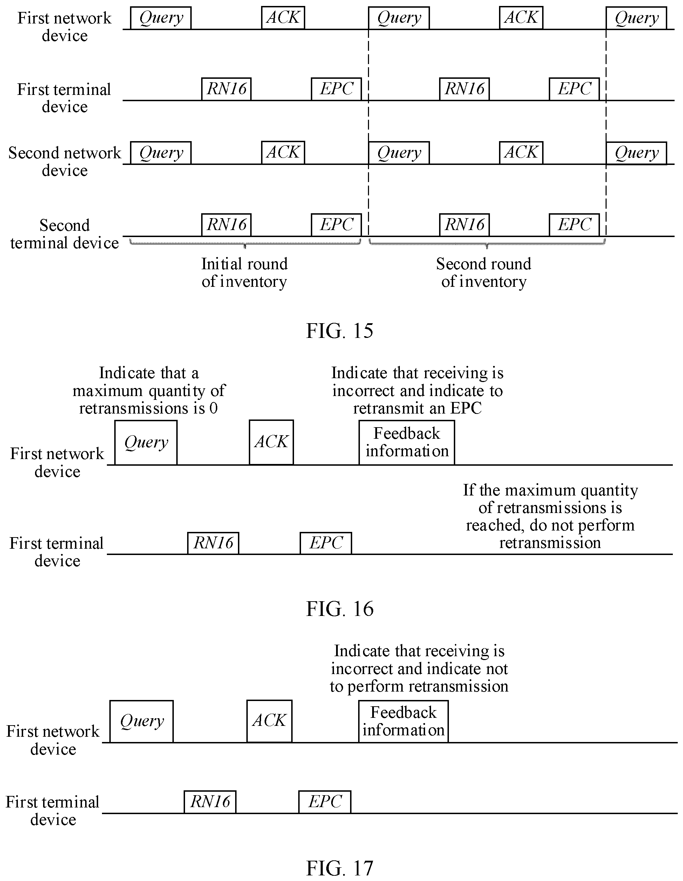

For example, FIG. 15 is a diagram of inventory. As shown in FIG. 15, n may be 2, the first terminal device and the second terminal device transmit EPCs only once in an initial round of inventory and a second round of inventory, uplink communication behaviors of the first terminal device and the second terminal device are consistent, and downlink communication behaviors of the first network device and the second network device are consistent. After two rounds of inventory, the first terminal device and the second terminal device may transmit the EPCs at least twice in each round of inventory.

In the example shown in FIG. 15, if the foregoing first possible implementation is used, the downlink signal indicating the maximum quantity of transmissions or the maximum quantity of retransmissions may be query signaling. A maximum quantity of transmissions indicated by query signaling in the initial round of inventory and the second round of inventory may be 1, or a maximum quantity of retransmissions may be 0.

For example, FIG. 16 is a diagram of other inventory. As shown in FIG. 16, in an initial round of inventory and a second round of inventory, the first network device sends query signaling to the first terminal device, where the query signaling indicates that a maximum quantity of retransmissions is 0. In an inventory process, after the first terminal device sends an EPC, if the first network device fails to receive the EPC, the first network device may indicate, by using feedback information, that the receiving is incorrect and indicate to retransmit the EPC. The first terminal device determines, based on the feedback information, whether the maximum quantity of retransmissions is reached, and if the quantity of retransmissions is reached currently, does not perform retransmission, and does not modify the flag bit of the first terminal device, and further continues to participate in another subsequent round of inventory. It may be understood that if the first network device successfully receives the EPC, and the first network device indicates, by using feedback information, that the receiving is correct, the first terminal device does not perform retransmission, and modifies the flag bit of the first terminal device.

In an inventory process after the second round of inventory, the first network device sends query signaling to the first terminal device, where the query signaling indicates that a maximum quantity of retransmissions is an integer greater than 0, for example, 1. In the inventory process, after the first terminal device sends the EPC, if the first network device successfully receives the EPC, and the first network device may indicate, by using feedback information, that the receiving is correct, the first terminal device does not perform retransmission, and modifies the flag bit of the first terminal device. If failing to receive the EPC, the first network device indicates, by using feedback information, the receiving is incorrect and indicates to retransmit the EPC. The first terminal device determines whether the maximum quantity of retransmissions is reached currently. If the maximum quantity of transmissions is not reached, the first terminal device performs retransmission, and does not modify the flag bit of the first terminal device. If the maximum quantity of retransmissions is reached, the first terminal device does not perform retransmission, does not modify the flag bit of the first terminal device, and continues to participate in another subsequent round of inventory. For a solution of the maximum quantity of transmissions, a mechanism is similar. Details are not described again.

In the example shown in FIG. 15, if the foregoing second possible implementation is used, the feedback information sent by the first network device indicates that the receiving is incorrect and indicates not to perform retransmission.

For example, FIG. 17 is a diagram of still other inventory. As shown in FIG. 17, in an initial round of inventory and a second round of inventory, after the tag sends an EPC, if the first network device fails to receive the EPC, the first network device indicates, by using feedback information, that the receiving is incorrect and indicates not to perform retransmission. Based on the feedback information, the first terminal device does not perform retransmission, does not modify the flag bit of the first terminal device, and continues to participate in another subsequent round of inventory. It may be understood that if the first network device successfully receives the EPC, and the first network device indicates, by using the feedback information, that receiving is correct, the first terminal device does not perform retransmission, and modifies the flag bit of the first terminal device.

In an inventory process after the second round of inventory, after the first terminal device sends the EPC, if the first network device successfully receives the EPC, and the first network device indicates, by using feedback information, that receiving is correct, the first terminal device does not perform retransmission, and modifies the flag bit of the first terminal device. If failing to receive the EPC, the first network device indicates, by using feedback information, that receiving is incorrect and indicates to perform retransmission. The first terminal device receives the feedback information, performs retransmission based on the feedback information, and does not modify the flag bit of the first terminal device.

In the example shown in FIG. 15, if the foregoing third possible implementation is used, the feedback information sent by the first network device indicates that the feedback information indicates that receiving is correct. The first network device may send, by using common information or common signaling (for example, select signaling) before a next round of inventory starts, an RN16 of a terminal device that fails in a previous round of inventory, to receive the EPC. One piece of common information or common signaling may indicate a plurality of RN16s, or may indicate one RN16. This is not limited in this embodiment of this application.

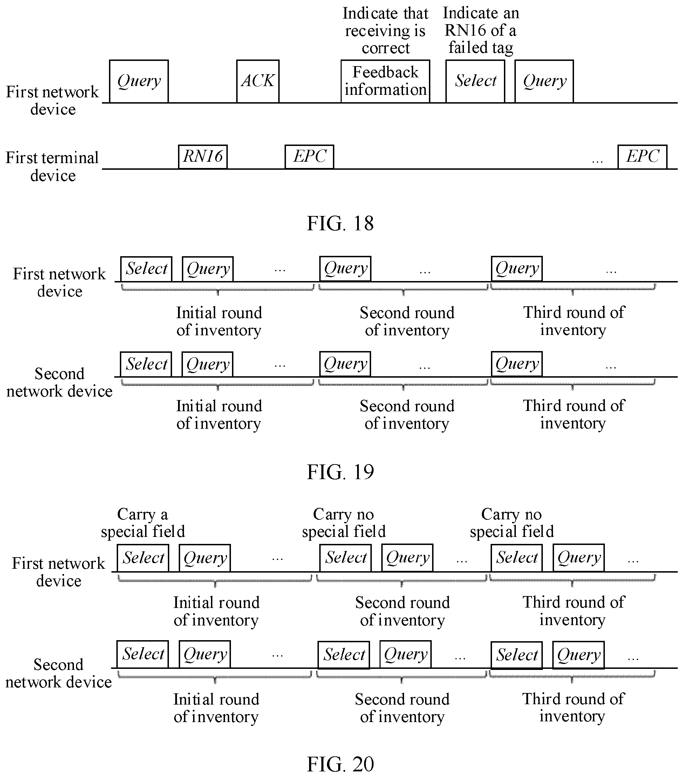

For example, FIG. 18 is a diagram of other inventory. As shown in FIG. 18, in an initial round of inventory and a second round of inventory, after the first terminal device sends the EPC, regardless of whether receiving is correct or not, the first network device indicates, by using feedback information, that receiving is correct, or directly sends a next piece of signaling (for example, query-type signaling, such as query signaling or QueryRep signaling). After receiving the feedback information, the first terminal device considers that inventory is successful, does not perform retransmission, and modifies the flag bit of the first terminal device. After a current round of inventory ends and before a next round of inventory starts, the first network device sends, by using select signaling, an RN16 of a terminal device that fails in a previous round of inventory. After receiving the select signaling, the first terminal device determines whether an RN16 of the first terminal device in the previous round of inventory exists in the RN16. If the RN16 of the first terminal device in the previous round of inventory exists in the RN16, the first terminal device considers that inventory fails, and changes the flag bit of the first terminal device back to continue to participate in the next round of inventory. If the RN16 of the first terminal device in the previous round of inventory does not exist in the RN16, the first terminal device ignores the RN16.

In an inventory process after the second round of inventory, after the first terminal device sends the EPC, if the first network device successfully receives the EPC, the first network device may indicate, by using feedback information or directly sending a next piece of signaling, that receiving is correct, and the first terminal device does not perform retransmission, and modifies the flag bit of the first terminal device. Alternatively, if the first network device fails to receive the EPC, the first network device indicates, by using feedback information, that receiving is incorrect and indicates to perform retransmission, and the first terminal device performs retransmission after receiving the feedback information, and does not modify the flag bit of the first terminal device. If the quantity of retransmissions of the EPC reaches the specified value, and the first network device still fails to receive the EPC, the first network device may indicate, by using feedback information, that receiving is correct, indicate an RN16 by using select signaling in a next round, negate the flag bit, and continue to perform inventory.

If the n rounds of data transmission may be the first n rounds of data transmission when data transmission starts, a first round of data transmission in the n rounds of data transmission is an initial round of data transmission. In the inventory scenario, the initial round of data transmission may also be referred to as an initial round of inventory.

This embodiment of this application provides four methods for determining the initial round of data transmission.

In a first method, the first network device may indicate the initial round of data transmission by using select signaling. Specifically, the initial round of data transmission includes select signaling, and another round of data transmission does not include select signaling.

For example, FIG. 19 is a diagram of an initial round of data transmission. As shown in FIG. 19, in the inventory scenario, when sending a downlink signal, the first network device sends select signaling only in a process of an initial round of inventory, and does not send select signaling in processes of a second round of inventory, a third round of inventory, and subsequent inventory. Therefore, existence of the select signaling may be used as a flag of the initial round of inventory. Uplink communication and downlink communication of the second network device are synchronized with those of the first network device. In this case, the second network device also sends select signaling only in a process of an initial round of inventory, and does not send select signaling in processes of a second round of inventory, a third round of inventory, and subsequent inventory.

In a second method, the first network device may indicate the initial round of data transmission by using a first field in select signaling or query signaling. Specifically, when each round of data transmission includes select signaling, the first network device may indicate the initial round of data transmission by using a first field in the select signaling. When select signaling is optional in each round of data transmission, the first network device may indicate the initial round of data transmission by using a first field in query signaling. The first field may be a special field, for example, an ID field.

For example, FIG. 20 is a diagram of another initial round of data transmission. As shown in FIG. 20, in the inventory scenario, each round of inventory includes select signaling, select signaling in a process of an initial round of inventory includes a special field, and select signaling in processes of a second round of inventory, a third round of inventory, and subsequent inventory includes no special field. Uplink communication and downlink communication of the second network device are synchronized with those of the first network device. In this case, select signaling in a process of an initial round of inventory includes a special field, and select signaling in processes of a second round of inventory, a third round of inventory, and subsequent inventory includes no special field.

In a third method, the first network device indicates the initial round of data transmission by using a first value of a first bit in select signaling or query signaling. Specifically, when each round of data transmission includes select signaling, the first network device may indicate the initial round of data transmission by using a first bit in the select signaling. When select signaling is optional in each round of data transmission, the first network device may indicate the initial round of data transmission by using a first bit in query signaling. The first value may be "1" or "0".

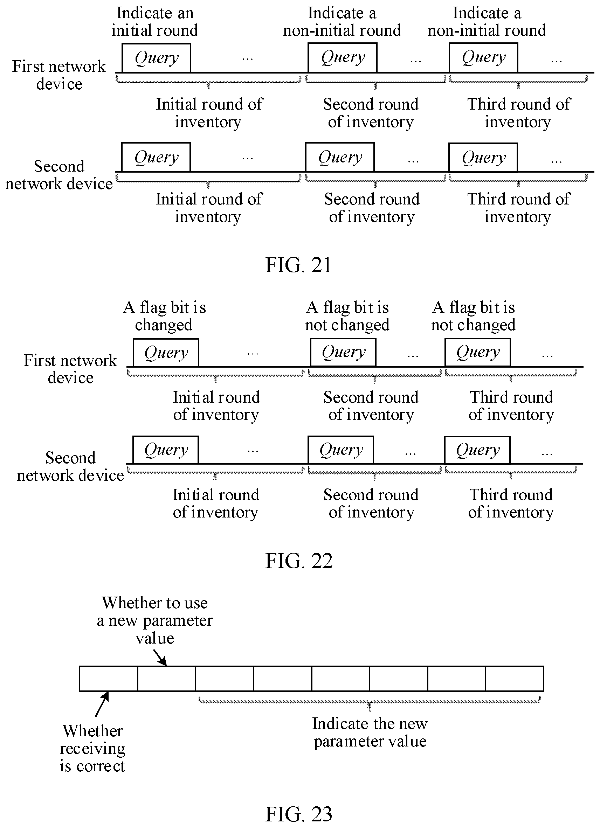

For example, FIG. 21 is a diagram of still another initial round of data transmission. As shown in FIG. 21, a first bit in query signaling in a process of an initial round of inventory is a first value, for example, 1, to indicate the initial round of inventory, and first bits in query signaling in processes of a second round of inventory, a third round of inventory, and subsequent inventory are non-first values, for example, 0, to indicate non-initial rounds of inventory. Uplink communication and downlink communication of the second network device are synchronized with those of the first network device. In this case, a first bit in query signaling in a process of an initial round of inventory is a first value, and first bits in query signaling in processes of a second round of inventory, a third round of inventory, and subsequent inventory are non-first values.

In a fourth method, a first round of data transmission after the first network device changes a terminal device that transmits the first uplink signal may be the initial round of data transmission. Specifically, if a field indicated by select signaling is different from a field indicated by select signaling in latest data transmission before the first round of data transmission, it may be considered that the first network device changes the terminal device that transmits the first uplink signal. In this case, subsequent data transmission starting from first Query is the initial round of data transmission. Alternatively, if a flag bit indicated by query signaling is different from a flag bit indicated by query signaling in latest data transmission before the first round of data transmission, it may be considered that the first network device changes the terminal device that transmits the first uplink signal. In this case, subsequent data transmission starting from first Query is the initial round of data transmission.

For example, FIG. 22 is a diagram of yet another initial round of data transmission. As shown in FIG. 22, a (inventory) flag bit in query signaling in a process of an initial round of inventory is changed, and (inventory) flag bits in query signaling in processes of a second round of inventory, a third round of inventory, and subsequent inventory are not changed. Uplink communication and downlink communication of the second network device are synchronized with those of the first network device. In this case, a (inventory) flag bit in query signaling in a process of an initial round of inventory is changed, and (inventory) flag bits in query signaling in processes of a second round of inventory, a third round of inventory, and subsequent inventory are not changed.

In data transmission other than the n rounds of data transmission, the first uplink signal may be transmitted at least twice. If a first signal is the first uplink signal whose receiving is incorrect, and a second signal is the first uplink signal that is retransmitted, the second signal may be transmitted based on a parameter value that is the same as a parameter value of the first signal, or may be transmitted based on a parameter value that is different from a parameter value of the first signal. This embodiment of this application provides a plurality of possible implementations.

In a possible implementation, if communication in the method 1300 belongs to data transmission other than the n rounds of data transmission, the method 1300 may further include: The first terminal device sends the second signal to the first network device based on the parameter value that is the same as the parameter value of the first signal. Correspondingly, the first network device receives the second signal.

If failing to receive the first uplink signal, the first network device may send feedback information, where the feedback information indicates that receiving is incorrect and indicates to perform retransmission. After receiving the feedback information, the first terminal device may send the second signal to the first network device based on the parameter value that is the same as the parameter value of the first signal.

In this implementation, no additional indication is needed. The first terminal device directly reuses the parameter value of the first signal, and sends the second signal to the first network device based on the parameter value that is the same as the parameter value of the first signal.

In another possible implementation, if communication in the method 1300 belongs to data transmission other than the n rounds of data transmission, the method 1300 may further include: The first network device sends first indication information. Correspondingly, the first terminal device receives the first indication information, where the first indication information indicates the first terminal device to transmit the second signal based on the parameter value that is the same as the parameter value of the first signal, or the first indication information indicates the first terminal device to transmit the second signal based on the parameter value that is different from the parameter value of the first signal.

In an example, if the first network device fails to receive the first uplink signal, the first network device may send feedback information, where the feedback information indicates that receiving is incorrect and indicates to perform retransmission; and may further send the first indication information, where the first indication information indicates the first terminal device to transmit the second signal based on the parameter value that is the same as the parameter value of the first signal. After receiving the feedback information and the first indication information, the first terminal device may send the second signal to the first network device based on the parameter value that is the same as the parameter value of the first signal.

In another example, if the first network device fails to receive the first uplink signal, the first network device may send feedback information, where the feedback information indicates that receiving is incorrect and indicates to perform retransmission; and may further send the first indication information, where the first indication information indicates the first terminal device to transmit the second signal based on the parameter value that is different from the parameter value of the first signal. After receiving the feedback information and the first indication information, the first terminal device may send the second signal to the first network device based on the parameter value that is different from the parameter value of the first signal, that is, a new parameter value.

In the two examples, the feedback information and the first indication information may be indicated by using one piece of information. This helps reduce signaling overheads. For example, if the first network device fails to receive the first uplink signal, the first network device may send feedback information, where the feedback information indicates that receiving is incorrect and indicates to perform retransmission, and indicates the first terminal device to transmit the second signal based on the parameter value that is different from the parameter value of the first signal.

In this implementation, in comparison with a manner of directly indicating a parameter value, a manner of indirect indication by using the first indication information occupies a relatively small quantity of bytes.

In still another possible implementation, if communication in the method 1300 belongs to data transmission other than the n rounds of data transmission, the method 1300 may further include: If failing to receive the first uplink signal, the first network device sends feedback information, where the feedback information indicates that receiving is incorrect and indicates to perform retransmission, and the feedback information further indicates a parameter value. After receiving the feedback information, the first terminal device may send the second signal to the first network device based on the parameter value. The parameter value may be the same as the parameter value of the first signal, or may be different from the parameter value of the first signal. This is not limited in this embodiment of this application.

In this implementation, the parameter value is directly indicated. This is more intuitive.

In an optional embodiment, if the first indication information indicates the first terminal device to transmit the second signal based on the parameter value that is different from the parameter value of the first signal, the first indication information may further include a new parameter value. Specifically, if the second signal is transmitted based on a first parameter value, the first indication information may further include the first parameter value, and the first parameter value includes a value of at least one of the following parameters: a transmission rate, a coding scheme, a code rate, a modulation scheme, a modulation order, a quantity of repetitions, a bandwidth, a data type, a data storage area, or a data storage location.

For example, if the first network device fails to receive the first uplink signal, the first network device may send feedback information, where the feedback information indicates that receiving is incorrect and indicates to perform retransmission, indicates the first terminal device to transmit the second signal based on the parameter value that is different from the parameter value of the first signal, and further indicates a parameter value needed for retransmission. If the first network device transmits the feedback information through MAC, one byte in the feedback information may indicate that receiving is incorrect and indicates to perform retransmission, indicate the first terminal device to transmit the second signal based on the parameter value that is different from the parameter value of the first signal, and further indicate a parameter value to be used for retransmission.

For example, in one byte, one bit may indicate whether receiving is correct, one bit indicates whether a new parameter value is used, and other bits indicate the parameter value to be used for retransmission. FIG. 23 is a diagram of feedback information. As shown in FIG. 23, a first bit of one byte indicates whether receiving is correct. If receiving is incorrect, retransmission is needed. A second bit indicates whether a new transmission parameter is used. If a new transmission parameter is used, remaining six bits may indicate the new transmission parameter. For example, the byte may be 00000000, the first bit being 0 indicates that receiving is incorrect, the second bit being 0 indicates that the parameter value that is the same as the parameter value of the first information is used, and the following six bits do not indicate a parameter value.

In the method provided in this embodiment of this application, information indicating that receiving is correct or incorrect, information indicating whether to use a new parameter value, information indicating a specific parameter value, and the like may be indicated by using different fields of one piece of signaling, different values of a same field of one piece of signaling, or the like. Actually, the information may be indicated by using different pieces of signaling, or may be indicated together with existing signaling. For example, receiving being correct or incorrect may be indicated by using one bit or a value of one bit, or may be implicitly indicated by sending a next piece of signaling (for example, Query-type signaling, such as query signaling and QueryRep signaling, without adding an additional bit), or may be indicated by using independent signaling. However, that retransmission (including reusing the parameter value of the first signal, or using a new parameter value, and an indication of a new parameter value) is needed due to a failure may be indicated by using another piece of signaling related to retransmission scheduling (for example, indicated by using bits in ACK signaling, which may be some additional bits or bits in an original format, or may be indicated by using independent signaling). Similarly, different pieces of signaling described herein may be transmitted through a physical layer (for example, transmitted through a dedicated physical feedback channel or control channel), may be transmitted through a higher layer (for example, by using a header or signaling of a medium access control (medium access control, MAC) layer, a radio link control layer (radio link control, RLC) layer protocol, a packet data convergence layer protocol (packet data convergence protocol, PDCP) layer, or a radio resource control (radio resource control, RRC) layer), may be partially transmitted through a physical layer and partially transmitted through a higher layer, or the like.

In the method provided in the foregoing embodiment, different rounds of data transmission may be different, and the first uplink signal is transmitted once or at least twice in each round of data transmission. An embodiment of this application further provides a parallel method. All rounds of data transmission are the same, the first uplink signal is transmitted once in first duration in each round of data transmission, and the first uplink signal is transmitted at least once in second duration in each round of data transmission. In other words, only initial transmission is performed in the first duration in each round of data transmission, and in the second duration, if the initial transmission fails, retransmission may be performed. The first duration may also be referred to as an initial transmission time period, and the second duration may also be referred to as a retransmission time period.

In the foregoing method 1300, if the first time and the second time are time in the first round of data transmission, and both the first time and the second time are in first duration in the first round of data transmission, the first uplink signal is transmitted once in the first duration; or if both the first time and the second time are in second duration in the first round of data transmission, the first uplink signal is transmitted at least once in the second duration.

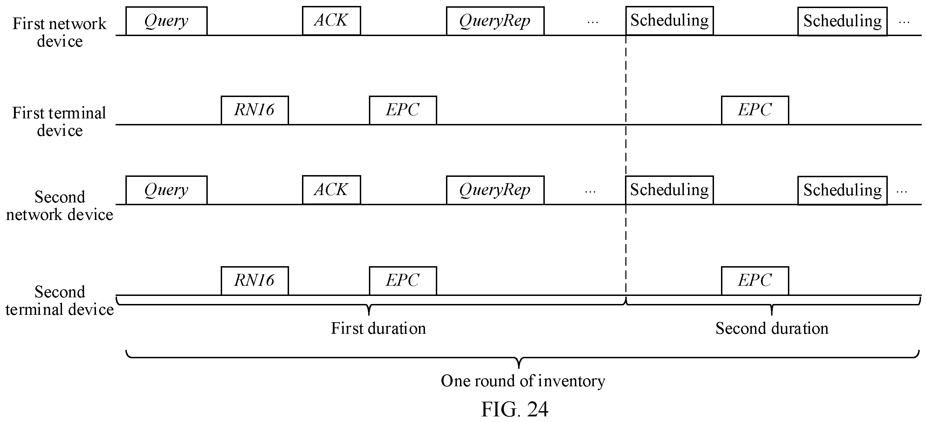

For example, FIG. 24 is a diagram of one round of data transmission. As shown in FIG. 24, the first terminal device transmits the EPC only once in first duration of one round of inventory. If the first network device fails to receive the EPC, the first terminal device may indicate, by using scheduling information, the first terminal device to retransmit the EPC in second duration of one round of inventory. Uplink communication and downlink communication of the second network device are synchronized with the first network device. In this case, the second terminal device is controlled to transmit the EPC only once in first duration of one round of inventory, and the second terminal device is indicated, by using scheduling information, to retransmit the EPC in the second duration.

According to the method provided in this embodiment of this application, the adjustment of the retransmission time location can be implemented. This helps eliminate the phenomenon of unalignment between different devices caused by retransmission, and reduce the waste of time resources. In addition, retransmission scheduling may be performed in a centralized manner in a current round of data transmission, and there is no need to wait for a next round of data transmission. In this case, overheads in the procedure are reduced. At the same time, a network device in the current round may directly schedule a terminal device for retransmission, and terminal devices do not need to perform contention. In this way, that the terminal devices still need to perform contention-based access again when entering the next round can be avoided. This helps avoid the waste of resources.

To transmit the first uplink signal only once in first duration of one round of data transmission, and transmit the first uplink signal at least once in the second duration, this embodiment of this application provides a plurality of possible implementations.

In a possible implementation, if both the first time and the second time in the method 1300 are in first duration of one round of data transmission, the method 1300 may further include: The first network device sends feedback information to the first terminal device, where the feedback information indicates that receiving is correct. The first terminal device receives the feedback information, considers that data transmission is successful, does not perform retransmission, and modifies the flag bit of the first terminal device. If both the first time and the second time in the method 1300 are in second duration of one round of data transmission, the method 1300 may further include: If failing to receive the first uplink signal, the first network device sends scheduling information, where the scheduling information indicates to retransmit the first uplink signal. The first terminal device receives the scheduling information, and retransmits the first uplink signal based on the scheduling information.

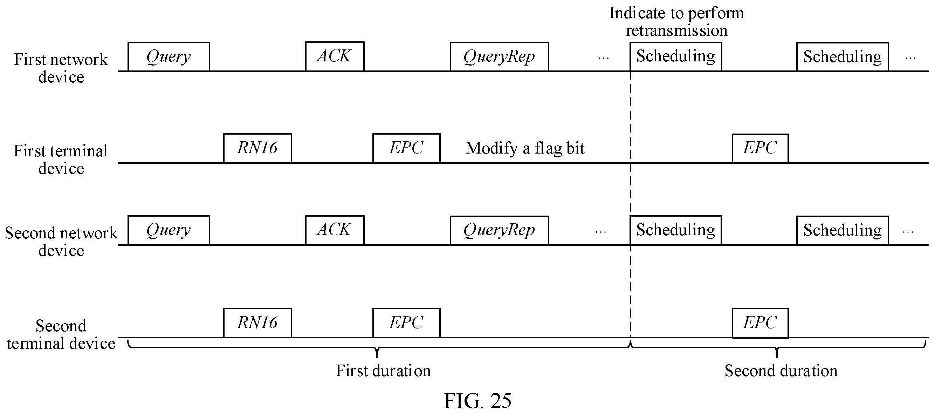

For example, FIG. 25 is a diagram of another round of data transmission. In an inventory procedure, the first terminal device sends the EPC to the first network device in the first duration. Regardless of whether receiving is correct or not, the first network device indicates, by using feedback information, that receiving is correct, or directly sends a next piece of signaling (for example, query-type signaling, such as query signaling or QueryRep signaling). After receiving the feedback information or the next piece of signaling, the first terminal device considers that inventory is successful, does not perform retransmission, and modifies the flag bit of the first terminal device. In the second duration, the first network device sends scheduling information for retransmission, and the first terminal device receives the scheduling information. Even if the first terminal device modifies the flag bit of the first terminal device, and the first terminal device considers that inventory is successful, the first terminal device needs to receive the scheduling information, determines whether the first terminal device needs to perform retransmission (for example, determines whether the scheduling information for retransmission includes an RN16 of the first terminal device), and if retransmission is needed, retransmits the EPC. The second network device synchronizes with the first network device in downlink communication, and the second terminal device synchronizes with the first terminal device in uplink communication. Details are not described herein again.

In another possible implementation, if both the first time and the second time in the method 1300 are in first duration of one round of data transmission, the method 1300 may further include: The first network device sends feedback information to the first terminal device, where the feedback information indicates that receiving is correct. The first terminal device receives the feedback information, does not learn of whether the data transmission is successful, does not perform retransmission, and does not modify the flag bit of the first terminal device. If both the first time and the second time in the method 1300 are in second duration of one round of data transmission, the method 1300 may further include: If failing to receive the first uplink signal, the first network device sends scheduling information, where the scheduling information indicates to retransmit the first uplink signal. The first terminal device receives the scheduling information, and retransmits the first uplink signal based on the scheduling information.

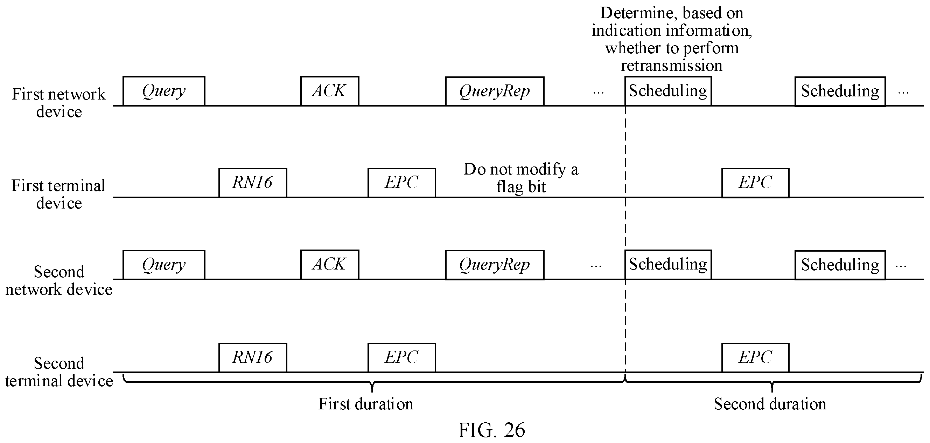

For example, FIG. 26 is a diagram of still another round of data transmission. In an inventory procedure, the first terminal device sends the EPC to the first network device in the first duration. Regardless of whether receiving is correct or not, the first network device indicates, by using feedback information, that receiving is correct, or directly sends a next piece of signaling (for example, query-type signaling, such as query signaling or QueryRep signaling). After receiving the feedback information or the next piece of signaling, the first terminal device does not learn of whether inventory is successful, does not perform retransmission, and does not modify the flag bit of the first terminal device. In the second duration, based on a retransmission status, whether sending is successful is determined, and the flag bit is modified. In the second duration, if the first terminal device does not receive scheduling information for scheduling retransmission by the first terminal device, the first terminal device considers that sending by the first terminal device is successful, modifies the flag bit, and does not participate in a subsequent round of inventory. If the first terminal device receives scheduling information for scheduling retransmission by the first terminal device, retransmission is performed based on the scheduling information. When a next piece of scheduling information for retransmission is not of the first terminal device, the first terminal device considers that retransmission has succeeded, and modifies the flag bit. Alternatively, whether previous retransmission is successful is explicitly indicated in a next piece of signaling (for example, a next piece of retransmission scheduling information). For example, when one bit in the signaling is 0, it indicates that inventory is not successful, retransmission is not performed, and the flag bit is not modified; when one bit in the signaling is 1, it indicates that inventory is successful, retransmission is not performed, and the flag bit is modified; and the like. Alternatively, if the first terminal device receives the scheduling information for scheduling retransmission by the first terminal device, the first terminal device performs retransmission based on the scheduling information. Only when the first terminal device receives feedback information indicating that the EPC has been correctly received, the first terminal device modifies the flag bit. The first terminal device does not modify the flag bit until the first terminal device receives feedback information indicating that the EPC has been correctly received. The second network device synchronizes with the first network device in downlink communication, and the second terminal device synchronizes with the first terminal device in uplink communication. Details are not described herein again.

In still another possible implementation, if both the first time and the second time in the method 1300 are in first duration of one round of data transmission, the method 1300 may further include: If failing to receive the first uplink signal, the first network device sends feedback information to the first terminal device, where the feedback information indicates that receiving is incorrect and indicates not to perform retransmission. The first terminal device receives the feedback information, does not perform retransmission, and does not modify the flag bit of the first terminal device. If both the first time and the second time in the method 1300 are in second duration of one round of data transmission, the method 1300 may further include: If failing to receive the first uplink signal, the first network device sends scheduling information, where the scheduling information indicates to retransmit the first uplink signal. The first terminal device receives the scheduling information, and retransmits the first uplink signal based on the scheduling information.

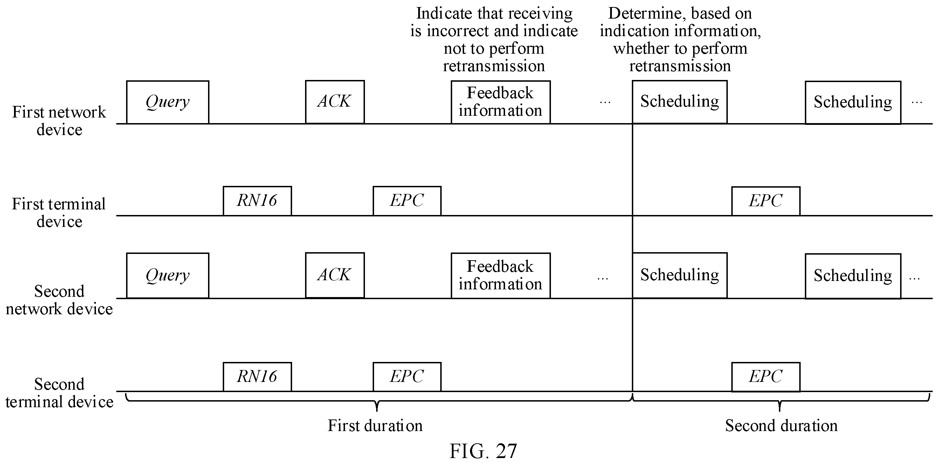

For example, FIG. 27 is a diagram of still another round of data transmission. In an inventory procedure, the first terminal device sends the EPC to the first network device in the first duration. If the first network device successfully receives the EPC, the first network device indicates, by using feedback information, that receiving is correct. After receiving the feedback information, the first network device learns that inventory is successful, and modifies the flag bit of the first network device. If failing to receive the EPC, the first network device indicates, by using feedback information, that receiving is incorrect and indicates not to perform retransmission. After receiving the feedback information, the first terminal device does not perform retransmission, and does not modify the flag bit. In the second duration, based on a retransmission status, the first terminal device may determine whether sending is successful, and modify the flag bit. In the second duration, if the first terminal device receives the scheduling information for scheduling retransmission by the first terminal device, the first terminal device performs retransmission based on the scheduling information. When a next piece of scheduling information for retransmission is not of the first terminal device, the first terminal device considers that retransmission has succeeded, and modifies the flag bit. Alternatively, whether previous retransmission is successful is explicitly indicated in a next piece of signaling (for example, a next piece of retransmission scheduling information). For example, when one bit in the signaling is 0, it indicates that inventory is not successful, retransmission is not performed, and the flag bit is not modified; when one bit in the signaling is 1, it indicates that inventory is successful, retransmission is not performed, and the flag bit is modified; and the like. Alternatively, if the first terminal device receives the scheduling information for scheduling retransmission by the first terminal device, the first terminal device performs retransmission based on the scheduling information. Only when the first terminal device receives feedback information indicating that the EPC has been correctly received, the first terminal device modifies the flag bit. The first terminal device does not modify the flag bit until the first terminal device receives feedback information indicating that the EPC has been correctly received. The second network device synchronizes with the first network device in downlink communication, and the second terminal device synchronizes with the first terminal device in uplink communication. Details are not described herein again.

The feedback information in the first duration may indicate two cases: that receiving is correct and not to perform retransmission, or that receiving is incorrect and not to perform retransmission. The two cases may be indicated by using one piece of independent signaling. Alternatively, the two cases may be indicated by using one bit in a next piece of signaling (for example, query-type signaling, such as query signaling or QueryRep signaling) (no additional signaling is needed, and overheads are lower), and the like. Alternatively, that receiving is correct is indicated by directly sending a next piece of signaling, that receiving is incorrect and not to perform retransmission is indicated by using independent signaling, and the like.

Sequence numbers of the foregoing processes do not mean execution sequences. The execution sequences of the processes should be determined based on functions and internal logic of the processes, and should not constitute any limitation on implementation processes of embodiments of this application.

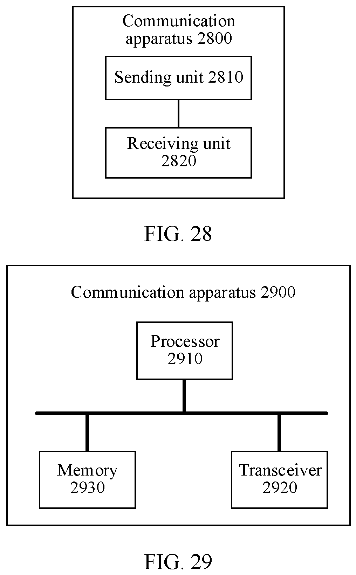

The foregoing describes in detail the communication method in embodiments of this application with reference to FIG. 1 to FIG. 27. The following describes in detail communication apparatuses in embodiments of this application with reference to FIG. 28 and FIG. 29.

FIG. 28 is a block diagram of a communication apparatus 2800 according to an embodiment of this application. The communication apparatus 800 may include a sending unit 2810 and a receiving unit 2820.

In a possible implementation, the communication apparatus 2800 may perform the steps performed by the first network device in the method 1300.

The sending unit 2810 is configured to send a first downlink signal at first time, where the first time is also time at which a second network device sends a second downlink signal, the first downlink signal includes first information, the second downlink signal includes second information, and a length of the first information is the same as a length of the second information. The receiving unit 2820 is configured to receive a first uplink signal from a first terminal device at second time, where the second time is also time at which the second network device receives a second uplink signal from a second terminal device, the first uplink signal includes third information, the second uplink signal includes fourth information, and a length of the third information is the same as a length of the fourth information.

In another possible implementation, the communication apparatus 800 may perform the steps performed by the first terminal device in the method 1300.

The receiving unit 2820 is configured to receive a first downlink signal from a first network device at first time, where the first time is also time at which a second terminal device receives a second downlink signal from a second network device, the first downlink signal includes first information, the second downlink signal includes second information, and a length of the first information is the same as a length of the second information. The sending unit 2810 is configured to send a first uplink signal to the first network device at second time, where the second time is also time at which the second terminal device sends a second uplink signal to the second network device, the first uplink signal includes third information, the second uplink signal includes fourth information, and a length of the third information is the same as a length of the fourth information.

It should be understood that the communication apparatus 2800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 2800 may be specifically the first network device or the first terminal device in the foregoing embodiments, and the communication apparatus 2800 may be configured to perform procedures and/or steps corresponding to the first network device or the first terminal device in the foregoing method embodiments. To avoid repetition, details are not described herein again.

The communication apparatus 2800 in the foregoing solutions has functions of implementing corresponding steps performed by the first network device and the first terminal device in the foregoing methods. The foregoing functions may be implemented by hardware, or may be implemented by hardware by executing corresponding software. The hardware or the software includes one or more modules corresponding to the function.

In this embodiment of this application, the communication apparatus 2800 in FIG. 28 may alternatively be a chip or a chip system, for example, a system on chip (system on chip, SoC).

FIG. 29 is a block diagram of another communication apparatus 2900 according to an embodiment of this application. The communication apparatus 2900 includes a processor 2910, a transceiver 2920, and a memory 2930. The processor 2910, the transceiver 2920, and the memory 2930 communicate with each other through an internal connection path. The memory 2930 is configured to store instructions. The processor 2910 is configured to execute the instructions stored in the memory 2930, to control the transceiver 2920 to send a signal and/or receive a signal.

It should be understood that the communication apparatus 2900 may be specifically the first network device or the first terminal device in the foregoing embodiments, and may be configured to perform steps and/or procedures corresponding to the first network device or the first terminal device in the foregoing method embodiments. Optionally, the memory 2930 includes a read-only memory and a random access memory, and provide instructions and data to the processor. A part of the memory may further include a non-volatile random access memory. For example, the memory may further store information of a device type. The processor 2910 may be configured to execute the instructions stored in the memory. In addition, when the processor 2910 executes the instructions stored in the memory, the processor 2910 is configured to perform the steps and/or procedures corresponding to the first network device or the first terminal device in the foregoing method embodiments. The transceiver 2920 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods may be implemented by using a hardware integrated logic circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, for example, a random access memory, a flash memory, a read-only memory, a programmable read-only memory, an electrically erasable programmable memory, a register, or the like. The storage medium is located in the memory, and the processor reads the instructions in the memory and completes the steps in the foregoing methods in combination with hardware of the processor. To avoid repetition, details are not described herein again.

An embodiment of this application further provides a communication system. The communication system may include the first network device and the first terminal device in the foregoing embodiments.

An embodiment of this application provides a readable-computer storage medium. The readable-computer storage medium is configured to store a computer program, and the computer program is used to implement the method corresponding to the first network device shown in the possible implementations in the foregoing embodiments.

An embodiment of this application provides another readable-computer storage medium. The readable-computer storage medium is configured to store a computer program, and the computer program is used to implement the method corresponding to the first terminal device shown in the possible implementations in the foregoing embodiments.

An embodiment of this application provides a computer program product. The computer program product includes a computer program (which may also be referred to as code or instructions). When the computer program is run on a computer, the computer may perform the method corresponding to the first network device shown in the foregoing embodiments.

An embodiment of this application provides another computer program product. The computer program product includes a computer program (which may also be referred to as code or instructions). When the computer program is run on a computer, the computer may perform the method corresponding to the first terminal device shown in the possible implementations in the foregoing embodiments.

An embodiment of this application provides a chip system. The chip system is configured to support the first network device in implementing the functions shown in embodiments of this application.

An embodiment of this application provides another chip system. The chip system is configured to support the first terminal device in implementing the functions shown in embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In some embodiments according to this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, or a receiving end) to perform all or a part of the steps of the methods described in embodiments. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first network device, a first downlink signal at first time, wherein the first time is also time at which a second network device sends a second downlink signal, the first downlink signal comprises first information, the second downlink signal comprises second information, and a length of the first information is the same as a length of the second information; and
receiving, by the first network device, a first uplink signal from a first terminal device at second time, wherein the second time is also time at which the second network device receives a second uplink signal from a second terminal device, the first uplink signal comprises third information, the second uplink signal comprises fourth information, and a length of the third information is the same as a length of the fourth information.

2. The method according to claim 1, wherein if the first uplink signal is an uplink data signal, the first downlink signal comprises a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted.

3. The method according to claim 1, wherein the method further comprises:
if the first uplink signal is an uplink data signal, and the first network device fails to receive the first uplink signal, sending, by the first network device, first feedback information, wherein the first feedback information indicates that receiving of the first uplink signal is incorrect, and indicates not to retransmit the first uplink signal.

4. The method according to claim 1, wherein the method further comprises:
if the first uplink signal is an uplink data signal, and the first network device fails to receive the first uplink signal, sending, by the first network device, second feedback information, wherein the second feedback information indicates that receiving of the first uplink signal is correct.

5. The method according to any one of claims 2 to 4, wherein the first time and the second time are time in a first round of data transmission; and if the first round of data transmission meets a first preset condition, the first uplink signal is transmitted once in the first round of data transmission; or
if the first round of data transmission does not meet the first preset condition, the first uplink signal is transmitted at least twice in the first round of data transmission.

6. The method according to claim 5, wherein the first round of data transmission is data transmission after first signaling and before second signaling, the first signaling is query signaling, and the second signaling is select signaling or query signaling.

7. The method according to claim 5 or 6, wherein if the first round of data transmission does not meet the first preset condition, a first signal is the first uplink signal whose receiving is incorrect, and a second signal is the first uplink signal that is retransmitted,
the method comprises:
receiving, by the first network device from the first terminal device, the second signal transmitted based on a parameter value that is the same as a parameter value of the first signal.

8. The method according to claim 5 or 6, wherein if the first round of data transmission does not meet the first preset condition, a first signal is the first uplink signal whose receiving is incorrect, and a second signal is the first uplink signal that is retransmitted,
the method further comprises:
sending, by the first network device, first indication information, wherein the first indication information indicates the first terminal device to transmit the second signal based on a parameter value that is the same as a parameter value of the first signal, or the first indication information indicates the first terminal device to transmit the second signal based on a parameter value that is different from a parameter value of the first signal.

9. The method according to claim 8, wherein if the second signal is transmitted based on a first parameter value, the first indication information further comprises the first parameter value, and the first parameter value comprises a value of at least one of the following parameters:
a transmission rate, a coding scheme, a code rate, a modulation scheme, a modulation order, a quantity of repetitions, a bandwidth, a data type, a data storage area, or a data storage location.

10. A communication method, comprising:
receiving, by a first terminal device, a first downlink signal from a first network device at first time, wherein the first time is also time at which a second terminal device receives a second downlink signal from a second network device, the first downlink signal comprises first information, the second downlink signal comprises second information, and a length of the first information is the same as a length of the second information; and
sending, by the first terminal device, a first uplink signal to the first network device at second time, wherein the second time is also time at which the second terminal device sends a second uplink signal to the second network device, the first uplink signal comprises third information, the second uplink signal comprises fourth information, and a length of the third information is the same as a length of the fourth information.

11. The method according to claim 10, wherein if the first uplink signal is an uplink data signal, the first downlink signal comprises a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted; and
sending, by the first terminal device, the first uplink signal to the first network device at the second time comprises:
when the maximum quantity of transmissions or the maximum quantity of retransmissions is not reached, sending, by the first terminal device, the first uplink signal to the first network device at the second time.

12. The method according to claim 10, wherein the first uplink signal is an uplink data signal; and
the method further comprises:
receiving, by the first terminal device, first feedback information from the first network device, wherein the first feedback information indicates that receiving of the first uplink signal is incorrect, and indicates not to retransmit the first uplink signal.

13. The method according to claim 10, wherein the first uplink signal is an uplink data signal; and
the method further comprises:
receiving, by the first terminal device, second feedback information from the first network device, wherein the second feedback information indicates that receiving of the first uplink signal is correct.

14. The method according to any one of claims 11 to 13, wherein the first time and the second time are time in a first round of data transmission; and if the first round of data transmission meets a first preset condition, the first uplink signal is transmitted once in the first round of data transmission; or
if the first round of data transmission does not meet the first preset condition, the first uplink signal is transmitted at least twice in the first round of data transmission.

15. The method according to claim 14, wherein the first round of data transmission is data transmission after first signaling and before second signaling, the first signaling is query signaling, and the second signaling is select signaling or query signaling.

16. The method according to claim 14 or 15, wherein if the first round of data transmission does not meet the first preset condition, a first signal is the first uplink signal whose receiving is incorrect, and a second signal is the first uplink signal that is retransmitted,
the method comprises:
sending, by the first terminal device, the second signal to the first network device based on a parameter value that is the same as a parameter value of the first signal.

17. The method according to claim 14 or 15, wherein if the first round of data transmission does not meet the first preset condition, a first signal is the first uplink signal whose receiving is incorrect, and a second signal is the first uplink signal that is retransmitted,
the method further comprises:
receiving, by the first terminal device, first indication information from the first network device, wherein the first indication information indicates the first terminal device to transmit the second signal based on a parameter value that is the same as a parameter value of the first signal, or the first indication information indicates the first terminal device to transmit the second signal based on a parameter value that is different from a parameter value of the first signal.

18. The method according to claim 17, wherein if the second signal is transmitted based on a first parameter value, the first indication information further comprises the first parameter value, and the first parameter value comprises a value of at least one of the following parameters:
a transmission rate, a coding scheme, a code rate, a modulation scheme, a modulation order, a quantity of repetitions, a bandwidth, a data type, a data storage area, or a data storage location.

19. A communication apparatus, comprising:
a sending unit, configured to send a first downlink signal at first time, wherein the first time is also time at which a second network device sends a second downlink signal, the first downlink signal comprises first information, the second downlink signal comprises second information, and a length of the first information is the same as a length of the second information; and
a receiving unit, configured to receive a first uplink signal from a first terminal device at second time, wherein the second time is also time at which the second network device receives a second uplink signal from a second terminal device, the first uplink signal comprises third information, the second uplink signal comprises fourth information, and a length of the third information is the same as a length of the fourth information.

20. The communication apparatus according to claim 19, wherein if the first uplink signal is an uplink data signal, the first downlink signal comprises a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted.

21. The communication apparatus according to claim 19, wherein the sending unit is further configured to:
if the first uplink signal is an uplink data signal, and the first uplink signal fails to be received, send first feedback information, wherein the first feedback information indicates that receiving of the first uplink signal is incorrect, and indicates not to retransmit the first uplink signal.

22. The communication apparatus according to claim 19, wherein the sending unit is further configured to:
if the first uplink signal is an uplink data signal, and the first uplink signal fails to be received, send second feedback information, wherein the second feedback information indicates that receiving of the first uplink signal is correct.

23. The communication apparatus according to any one of claims 20 to 22, wherein the first time and the second time are time in a first round of data transmission; and if the first round of data transmission meets a first preset condition, the first uplink signal is transmitted once in the first round of data transmission; or
if the first round of data transmission does not meet the first preset condition, the first uplink signal is transmitted at least twice in the first round of data transmission.

24. The communication apparatus according to claim 23, wherein the first round of data transmission is data transmission after first signaling and before second signaling, the first signaling is query signaling, and the second signaling is select signaling or query signaling.

25. The communication apparatus according to claim 23 or 24, wherein if the first round of data transmission does not meet the first preset condition, a first signal is the first uplink signal whose receiving is incorrect, and a second signal is the first uplink signal that is retransmitted,
the receiving unit is further configured to:
receive, from the first terminal device, the second signal transmitted based on a parameter value that is the same as a parameter value of the first signal.

26. The communication apparatus according to claim 23 or 24, wherein if the first round of data transmission does not meet the first preset condition, a first signal is the first uplink signal whose receiving is incorrect, and a second signal is the first uplink signal that is retransmitted,
the sending unit is further configured to:
send first indication information, wherein the first indication information indicates the first terminal device to transmit the second signal based on a parameter value that is the same as a parameter value of the first signal, or the first indication information indicates the first terminal device to transmit the second signal based on a parameter value that is different from a parameter value of the first signal.

27. The communication apparatus according to claim 26, wherein if the second signal is transmitted based on a first parameter value, the first indication information further comprises the first parameter value, and the first parameter value comprises a value of at least one of the following parameters:
a transmission rate, a coding scheme, a code rate, a modulation scheme, a modulation order, a quantity of repetitions, a bandwidth, a data type, a data storage area, or a data storage location.

28. A communication apparatus, comprising:
a receiving unit, configured to receive a first downlink signal from a first network device at first time, wherein the first time is also time at which a second terminal device receives a second downlink signal from a second network device, the first downlink signal comprises first information, the second downlink signal comprises second information, and a length of the first information is the same as a length of the second information; and
a sending unit, configured to send a first uplink signal to the first network device at second time, wherein the second time is also time at which the second terminal device sends a second uplink signal to the second network device, the first uplink signal comprises third information, the second uplink signal comprises fourth information, and a length of the third information is the same as a length of the fourth information.

29. The communication apparatus according to claim 28, wherein if the first uplink signal is an uplink data signal, the first downlink signal comprises a maximum quantity of transmissions or a maximum quantity of retransmissions, the maximum quantity of transmissions indicates a maximum quantity of transmissions of the first uplink signal, and the maximum quantity of retransmissions indicates a maximum quantity of retransmissions allowed after the first uplink signal fails to be transmitted; and
the sending unit is further configured to:
when the maximum quantity of transmissions or the maximum quantity of retransmissions is not reached, send the first uplink signal to the first network device at the second time.

30. The communication apparatus according to claim 28, wherein the first uplink signal is an uplink data signal; and
the receiving unit is further configured to:
receive first feedback information from the first network device, wherein the first feedback information indicates that receiving of the first uplink signal is incorrect, and indicates not to retransmit the first uplink signal.

31. The communication apparatus according to claim 28, wherein the first uplink signal is an uplink data signal; and
the receiving unit is further configured to:
receive second feedback information from the first network device, wherein the second feedback information indicates that receiving of the first uplink signal is correct.

32. The communication apparatus according to any one of claims 29 to 31, wherein the first time and the second time are time in a first round of data transmission; and if the first round of data transmission meets a first preset condition, the first uplink signal is transmitted once in the first round of data transmission; or
if the first round of data transmission does not meet the first preset condition, the first uplink signal is transmitted at least twice in the first round of data transmission.

33. The communication apparatus according to claim 32, wherein the first round of data transmission is data transmission after first signaling and before second signaling, the first signaling is query signaling, and the second signaling is select signaling or query signaling.

34. The communication apparatus according to claim 32 or 33, wherein if the first round of data transmission does not meet the first preset condition, a first signal is the first uplink signal whose receiving is incorrect, and a second signal is the first uplink signal that is retransmitted,
the sending unit is configured to:
send the second signal to the first network device based on a parameter value that is the same as a parameter value of the first signal.

35. The communication apparatus according to claim 32 or 33, wherein if the first round of data transmission does not meet the first preset condition, a first signal is the first uplink signal whose receiving is incorrect, and a second signal is the first uplink signal that is retransmitted,
the receiving unit is configured to:
receive first indication information from the first network device, wherein the first indication information indicates the first terminal device to transmit the second signal based on a parameter value that is the same as a parameter value of the first signal, or the first indication information indicates the first terminal device to transmit the second signal based on a parameter value that is different from a parameter value of the first signal.

36. The communication apparatus according to claim 35, wherein if the second signal is transmitted based on a first parameter value, the first indication information further comprises the first parameter value, and the first parameter value comprises a value of at least one of the following parameters:
a transmission rate, a coding scheme, a code rate, a modulation scheme, a modulation order, a quantity of repetitions, a bandwidth, a data type, a data storage area, or a data storage location.

37. A communication method, comprising:
sending, by a first network device, a first downlink signal at first time, wherein the first time is also time at which a second network device sends a second downlink signal, the first downlink signal comprises first information, the second downlink signal comprises second information, and a length of the first information is the same as a length of the second information;
receiving, by a first terminal device, the first downlink signal from the first network device at the first time, wherein the first time is also time at which a second terminal device receives the second downlink signal from the second network device;
sending, by the first terminal device, a first uplink signal to the first network device at the second time based on the first downlink signal, wherein the second time is also time at which the second terminal device sends a second uplink signal to the second network device, the first uplink signal comprises third information, the second uplink signal comprises fourth information, and a length of the third information is the same as a length of the fourth information; and
receiving, by the first network device, the first uplink signal from the first terminal device at the second time, wherein the second time is also time at which the second network device receives the second uplink signal from the second terminal device.

38. A communication apparatus, comprising a processor and a memory, wherein the memory is configured to store code instructions, and the processor is configured to run the code instructions, to perform the method according to any one of claims 1 to 9 or the method according to any one of claims 10 to 18.

39. A communication system, comprising the communication apparatus according to any one of claims 19 to 27 and the communication apparatus according to any one of claims 28 to 36.

40. A communication apparatus, comprising a transmitter, a receiver, and a processor, wherein the transmitter is configured to send a signal to another apparatus, the receiver is configured to receive a signal from the another apparatus, the processor is coupled to a memory, the memory is configured to store a computer program, and when the processor invokes the computer program, the communication apparatus is caused to perform the method according to any one of claims 1 to 9 or the method according to any one of claims 10 to 18.

41. A chip system, comprising a processor, configured to: invoke a computer program from a memory, and run the computer program, to enable a communication device in which the chip system is installed to perform the method according to any one of claims 1 to 9 or the method according to any one of claims 10 to 18.

42. A computer-readable storage medium, wherein the computer-readable storage medium stores a computer program, and when the computer program is run on a computer, the method according to any one of claims 1 to 9 or the method according to any one of claims 10 to 18 is performed.

43. A computer program product, wherein the computer program product comprises instructions, and when the instructions are executed, the method according to any one of claims 1 to 9 or the method according to any one of claims 10 to 18 is performed.
